# NEUE EUROPÄISCHE PATENTSCHRIFT

(11) **EP 2 783 819 B2**
(45) Veröffentlichungstag und Bekanntmachung des Hinweises auf die Entscheidung über den Einspruch: **24.02.2021**
(45) Hinweis auf die Patenterteilung: 09.03.2016
(21) Anmeldenummer: 13195533.8
(22) Anmeldetag: 03.12.2013
(51) Int. Cl.: B26D 7/06, B26D 7/32, B65G 15/24, B65G 15/12

(54) **Förderbandkassette und Hochleistungsaufschnittschneidemaschine mit zumindest einer entnehmbaren Förderbandkassette**
Conveyor band cassette and high performance food slicing machine with at least one removable conveyor band cassette
Cassette amovible de bande de convoyeur et trancheur haute puissance doté d'au moins une cassette de bande amovible

(30) Priorität: 03.12.2012 DE 102012222042; 12.04.2013 DE 102013206510
(43) Veröffentlichungstag der Anmeldung: 01.10.2014
(73) Patentinhaber: Textor Maschinenbau GmbH, 87787 Wolfertschwenden (DE)
(72) Erfinder: Mayer, Josef, 87766 Memmingerberg (DE)
(74) Vertreter: Manitz Finsterwald Patent- und Rechtsanwaltspartnerschaft mbB

(56) Entgegenhaltungen:
- EP-A1- 1 584 580
- EP-A1- 2 357 063
- WO-A1-2006/103348
- DE-A1-102008 024 314
- DE-A1-102010 001 969
- US-A1- 2008 073 185

## Beschreibung

Die Erfindung betrifft eine Aufschnittschneidemaschine für Lebensmittelprodukte, insbesondere Hochleistungs-Slicer, mit zumindest einem Bandförderer.

Insbesondere in Hochleistungsaufschnittschneidemaschinen müssen Produkte einer Schneidebene zugeführt werden, damit die Produkte in Scheiben geschnitten werden können. Weiterhin müssen dann die abgeschnittenen Scheiben zu Portionen gruppiert und anschließend aus dem Schneidebereich abtransportiert werden. Für diese Förderaufgaben werden normalerweise aktiv angetriebene Förderbänder eingesetzt. Bei diesen handelt es sich entweder um Band- oder Gurtförderer mit relativ breiten flachen Bänder bzw. Gurten oder um Riemenförderer mit einer Vielzahl von relativ schmalen Einzelriemen, die insbesondere einen kreisförmigen Querschnitt aufweisen können.

Diejenigen Förderer, welche die Produkte der Schneidebene zuführen, sollen normalerweise bis kurz vor die Schneidebene reichen, um eine optimale Traktion der Produkte zu gewährleisten. Daher werden diese Förderer oft auch als Traktionsbänder bezeichnet.

Diejenigen Förderer, welche die aufgeschnittenen Scheiben auffangen und zu Portionen aus mehreren Scheiben gruppieren, nennt man üblicherweise Portionierbänder. Es werden oft zumindest zwei nacheinander angeordnete Förderer eingesetzt, um nach Übergabe der Portion von dem ersten Förderer auf den zweiten Förderer unmittelbar wieder mit der Ablage neuer Scheiben auf dem ersten Förderer beginnen zu können. Diese wenigstens zwei nacheinander angeordneten Förderer werden im Rahmen der vorliegenden Offenbarung auch gemeinsam als ein "Portionierband" bezeichnet, obwohl mehrere hintereinander angeordnete Einzelförderer vorgesehen sind.

Die Erfindung ist nicht auf derartige Traktionsbänder oder Portionierbänder beschränkt. Grundsätzlich kann die Erfindung an jeder Art von Bandförderer realisiert werden.

In der Praxis werden während des Betriebs einer Aufschnittschneidemaschine sowohl die Zuführbänder (insbesondere die Traktionsbänder) als auch die Abtransportbänder (insbesondere die Portionierbänder) üblicherweise stark verschmutzt. Es ist deshalb notwendig, diese Förderbänder täglich, oftmals sogar mehrmals täglich, zu reinigen. Dazu ist normalerweise eine Entnahme der Bandgurte oder Transportriemen notwendig, um eine gründliche Reinigung durchführen zu können.

Aus dem Stand der Technik ist es bekannt, eine solche Entnahme dadurch zu ermöglichen, dass die Förderer einseitig an einem Maschinengestell aufgehängt sind, um eine einfache Entnahme des Bandes oder Gurtes zu erreichen. Die Förderer verbleiben dabei während der Reinigung in der Maschine. Der Nachteil einer solchen Vorgehensweise ist, dass mit zunehmender Breite des Bandförderers sehr massive Bandgestelle notwendig sind. Weiterhin wird seitlich neben dem Förderer viel Platz benötigt, um das jeweilige Fördermittel, beispielsweise den Gurt, bei an der Maschine verbleibendem Förderer zu entnehmen.

US 2008/0073185 A1 offenbart eine Fördereinrichtung gemäß dem Oberbegriff des Anspruchs 15. Eine Förderbandeinheit kann hierbei z.B. zu Wartungszwecken entnommen werden.

Des Weiteren sind Förderer bekannt, die einschließlich des jeweiligen Fördermittels einfach entnommen werden können. Allerdings sind diese Förderer üblicherweise über eine Kupplung bzw. eine Kupplungseinheit an eine Antriebseinheit gekoppelt. Dies bedeutet, dass auf der Antriebsrolle des Förderers eine Kupplung sitzt, die im Betrieb die Verbindung zu einem Antriebsmotor herstellt. Durch eine solche Bauart ergibt sich allerdings eine sehr große Breite, da entweder der Antriebsmotor axial neben der Antriebsrolle des Förderers angeordnet werden muss oder es erforderlich ist, eine Kupplungseinheit mit Lagerung axial zur Antriebsrolle des Förderers anzuordnen, wobei diese Kupplungseinheit dann über eine weitere Verbindung, z.B. einen Zahnriemen, mit einem Antriebsmotor gekoppelt werden muss.

Beide Varianten resultieren in einer großen Breite und ermöglichen es zudem nicht, mehrere Antriebe an einen entnehmbaren Förderer anzuschließen.

Aufgabe der Erfindung ist es, eine Maschine der eingangs genannten Art zu schaffen, welche die erwähnten Nachteile nicht aufweist und welche insbesondere bei Platz sparender und kostengünstiger Bauweise eine möglichst einfache Reinigung ermöglicht.

Die Lösung dieser Aufgabe erfolgt durch die Merkmale des Anspruchs 1 und des Anspruchs 15.

Erfindungsgemäß ist der Bandförderer als entnehmbare Bandkassette ausgeführt. Die Bandkassette ist für einen Mehrspurbetrieb ausgelegt und mit mehreren unabhängigen Antrieben koppelbar, die jeweils zumindest einer Spur zugeordnet sind.

Bevorzugte Ausführungsformen der Erfindung sind auch in den abhängigen Ansprüchen, der Beschreibung sowie den Zeichnungen angegeben.

Gemäß einem Ausführungsbeispiel ist die Bandkassette in Förderrichtung gesehen vor der Schneidebene angeordnet und insbesondere als Traktionsband ausgebildet. Gemäß einer alternativen Ausgestaltung ist die Bandkassette in Förderrichtung gesehen hinter der Schneidebene angeordnet und insbesondere als Portionierband ausgebildet.

Die Bandkassette kann - in Förderrichtung gesehen - eine wirksame Band- oder Förderlänge aufweisen, die weniger als 500 mm, insbesondere weniger als 300 mm, insbesondere weniger als 200 mm und insbesondere zwischen 50 mm und 150 mm beträgt. Die Erfindung ermöglicht es, sehr kurze Bandförderer zu realisieren, die beispielsweise lediglich eine Länge von ungefähr 100 mm aufweisen und dabei mehrere unabhängige Antriebe aufweisen können. Von Vorteil ist dies insbesondere für die Ausgestaltung einer entnehmbaren Bandkassette als eine Portioniereinheit, bei der zumindest einer der Förderer eine sehr kurze Förderlänge aufweisen soll.

Gemäß einem Ausführungsbeispiel ist zumindest ein direkter Antrieb für die Bandkassette vorgesehen. Eine solche Ausgestaltung kommt mit einer minimalen Anzahl von Bauteilen aus und ist folglich äußerst kostengünstig. Ferner ist es hierdurch möglich, mehrere Antriebe an einer einzigen entnehmbaren Bandkassette anzubringen. Ein solcher Multiantrieb eröffnet vielfältige Konfigurationsmöglichkeiten. So ist es beispielsweise möglich, einen Mehrspurbetrieb zu realisieren, bei dem die einzelnen Spuren unabhängig voneinander angetrieben und gesteuert werden können. Besonders vorteilhaft ist dies für Portioniereinheiten. Bislang war es zumindest äußerst aufwendig und schwierig, wenn nicht praktisch unmöglich, mehrspurige Portionierbänder zu realisieren, da die hygienische und funktionale Unterbringung mehrerer Antriebe nicht befriedigend bewerkstelligt werden konnte.

Gemäß einer weiteren Ausführungsform der Erfindung ist wenigstens ein Antriebsmotor direkt mit der Bandkassette gekoppelt. Eine derartige Koppelung kann beispielsweise über eine Riemenverbindung, mit der relativ lange Strecken zwischen dem Motor und derjenigen Stelle der Bandkassette, an welcher diese angetrieben werden soll, überwunden werden können, oder über eine Zahnradanordnung erfolgen, beispielsweise über eine Zahnradpaarung.

Des Weiteren kann erfindungsgemäß vorgesehen sein, dass ein Antriebsmotor für die Bandkassette eine Antriebswelle und die Bandkassette ein Antriebsrad aufweist, wobei die Antriebswelle und das Antriebsrad direkt miteinander gekoppelt sind. Dies ermöglicht einen besonders einfachen und kostengünstigen Aufbau, der ohne Beeinträchtigung der Funktionalität wenig Platz beansprucht und hohen hygienischen Anforderungen gerecht wird.

In einer bevorzugten Ausgestaltung ist vorgesehen, dass der Antriebsmotor unterhalb der Bandkassette angeordnet ist. Hierdurch wird die Breite des Bandförderers nicht unnötig vergrößert. Unterhalb des Förderers zur Verfügung stehender Bauraum kann so genutzt werden. Insbesondere ist es möglich, mehrere Antriebe nebeneinander oder hintereinander unterhalb der Bandkassette anzuordnen.

Ein weiteres Ausführungsbeispiel der Erfindung schlägt vor, dass die Bandkassette eine gelagerte Bandrolle aufweist, wobei ein Antriebsrad der Bandkassette über die Lagerung der Bandrolle gelagert ist. Hierdurch wird der Antrieb der Bandkassette weiter vereinfacht und es werden Bauteile eingespart, indem die Lagerung der Bandrolle für die Lagerung des Antriebsrades genutzt wird.

Insbesondere ist hierbei das Antriebsrad der Bandkassette koaxial zur Bandrolle und insbesondere axial neben der Bandrolle angeordnet. Ein mit dem Antriebsrad zusammenwirkender Antriebsmotor kann so - insbesondere unterhalb der Bandkassette - grundsätzlich an jeder beliebigen Stelle angeordnet werden, die eine direkte Koppelung mit dem Antriebsrad insbesondere über eine Riemenverbindung oder eine Zahnradanordnung ermöglicht. Von besonderem Vorteil ist dabei, dass es nicht erforderlich ist, den Antriebsmotor bzw. dessen Antriebswelle in axialer Verlängerung der Bandrolle anzuordnen, so dass eine unnötige Verbreiterung des Bandförderers vermieden wird.

In einer besonders bevorzugten Ausgestaltung der Erfindung ist zum Aufheben und Herstellen einer Koppelung zwischen einem Antriebsmotor für die Bandkassette und der Bandkassette jeweils eine Relativbewegung zwischen Antriebsmotor und Bandkassette vorgesehen. Bei dieser Relativbewegung kann es sich um eine Schwenkbewegung handeln, die eine reine Dreh- oder Rotationsbewegung umfassen, grundsätzlich aber auch eine komplexere Bewegung sein kann, welche eine Überlagerung mehrerer Einzelbewegungen ist.

So kann einfach durch Bewegen entweder des Antriebsmotors oder der Bandkassette die antriebsmäßige Koppelung zwischen Motor und Kassette aufgehoben werden, um eine Entnahme der Kassette zu ermöglichen.

Von besonderem Vorteil ist bei diesem Konzept, dass der Antriebsmotor an der Maschine bzw. an dem Unterbau der Fördereinrichtung verbleiben kann.

In einer bevorzugten Ausgestaltung wird durch die Relativbewegung zwischen Antriebsmotor und Bandkassette der Abstand zwischen einer Antriebsachse des Antriebsmotors und einer Antriebsachse der Bandkassette verändert. Der Motor und die Kassette werden folglich derart relativ zueinander bewegt, dass eine Abstandsveränderung zwischen den beiden Antriebsachsen bewirkt wird. Insbesondere kann hierdurch der Abstand zwischen einer Antriebswelle des Antriebsmotors und einem Antriebsrad der Bandkassette verändert werden. Hierdurch kann beispielsweise ein Antriebsriemen entspannt bzw. gespannt oder eine Zahnradanordnung außer Eingriff bzw. in Eingriff gebracht werden.

Gemäß einem Ausführungsbeispiel der Erfindung kann eine Koppelung zwischen einem Antrieb für die Bandkassette und der Bandkassette durch Entspannen eines Antriebsriemens aufhebbar und durch Spannen des Antriebsriemens herstellbar sein. Das Entspannen und Spannen des Antriebsriemens kann jeweils durch eine Relativbewegung zwischen Antrieb und Bandkassette erfolgen, wie vorstehend bereits erwähnt. Eine solche Relativbewegung ist grundsätzlich aber nicht zwingend.

Gemäß einem weiteren Ausführungsbeispiel der Erfindung ist für die Bandkassette eine bei entnommener Bandkassette an der Maschine verbleibende Aufnahme vorgesehen, an der die Bandkassette verriegelbar ist, wobei die Verriegelung zur Entnahme der Bandkassette aufhebbar und zum Einbau der Bandkassette herstellbar ist.

In einer Variante der Erfindung ist es möglich, dass zur Entnahme oder zum Einbau der Bandkassette eine Koppelung zwischen einem Antrieb der Bandkassette und der Bandkassette gleichzeitig mit einer Verriegelung der Bandkässette aufhebbar bzw. herstellbar ist, beispielsweise einer Verriegelung der Bandkassette an einer an der Maschine verbleibenden Aufnahme, wie vorstehend erwähnt.

Hierdurch ist es insbesondere möglich, lediglich einen einzigen Arbeits- oder Betätigungsvorgang vorzusehen, mit dem gleichzeitig die Verriegelung und die Koppelung aufgehoben werden, um die Bandkassette entnehmen zu können.

In einer alternativen Variante der Erfindung kann vorgesehen sein, dass zur Entnahme oder zum Einbau der Bandkassette gleichzeitig die Koppelung zwischen einem Antrieb für die Bandkassette und der Bandkassette einerseits und eine Entnahme- bzw. Einbaubewegung der Bandkassette andererseits durchzuführen sind, und zwar nach dem Aufheben bzw. vor dem Herstellen einer Verriegelung der Bandkassette.

Hierbei wird die Entnahme- bzw. Einbaubewegung der Bandkassette dazu genutzt, gleichzeitig die antriebsmäßige Koppelung aufzuheben bzw. herzustellen. Bei dem Aufheben bzw. Herstellen der Verriegelung der Bandkassette handelt es sich dagegen um einen separaten Vorgang.

Für eine Koppelung zwischen einem Antrieb für die Bandkassette und der Bandkassette und/oder für eine Verriegelung der Bandkassette an einer Aufnahme der Maschine kann eine Betätigungseinrichtung vorgesehen sein. Insbesondere kann es sich dabei um eine manuell zu betätigende mechanische Betätigungseinrichtung handeln. Dies stellt eine besonders zuverlässige und vor allem auch kostengünstige Variante dar.

Die Betätigungseinrichtung kann einen Hebel mit einer Welle umfassen, wobei durch Drehen der Welle ein Antrieb für die Bandkassette, insbesondere eine einen Antrieb für die Bandkassette tragende Schwinge, um eine Schwenkachse verschwenkbar und/oder ein Verriegelungsorgan für die Bandkassette zwischen einer Verriegelungsposition und einer Freigabeposition bewegbar ist.

Wenn die Betätigungseinrichtung dazu ausgebildet ist, gleichzeitig die Koppelung zwischen Antrieb und Bandkassette einerseits und die Verriegelung zwischen Bandkassette und Aufnahme andererseits aufzuheben bzw. herzustellen, dann kann bei diesem Ausführungsbeispiel die mittels des Hebels in Drehung versetzbare Welle derart ausgebildet sein, dass gleichzeitig der Antrieb bzw. die den Antrieb tragende Schwinge verschwenkt und das Verriegelungsorgan bewegt wird. Gemäß einer besonders einfachen praktischen Umsetzung kann die Welle exzentrisch ausgebildet sein bzw. einen exzentrisch ausgebildeten Abschnitt umfassen.

Wenn zum Aufheben und Herstellen einer Koppelung zwischen einem Antrieb für die Bandkassette und der Bandkassette eine Bewegung der Bandkassette relativ zu dem Antrieb erfolgt, dann ist es nicht zwingend, dass hierzu die Bandkassette als Ganzes bewegt wird. Es ist auch möglich, dass lediglich eine Baugruppe oder ein Bauteil der Bandkassette relativ zu dem Antrieb bewegt wird.

Gemäß einer weiteren Ausgestaltung der Erfindung kann die Bandkassette mehrere in Förderrichtung gesehen hintereinander angeordnete, insbesondere unmittelbar aufeinanderfolgende, Einzelförderer umfassen, denen jeweils ein separater Antrieb zugeordnet ist. Besonders vorteilhaft ist diese Ausgestaltung dann, wenn es sich bei der Bandkassette um eine Portioniereinheit bzw. ein Portionierband handelt. Zumindest ein Einzelförderer oder jeder Einzelförderer kann dabei für einen Mehrspurbetrieb ausgebildet sein.

Wenn die als Ganzes entnehmbare Bandkassette ein Portionierband ist, das zwei aufeinander folgende Einzelförderer umfasst, die jeweils zweispurig ausgebildet sind, dann kann für jede Spur jedes Einzelförderers ein separater Antrieb vorgesehen sein, so dass beispielsweise vier unabhängig voneinander betreibbare und ansteuerbare Antriebsmotoren mit der Bandkassette gekoppelt bzw. koppelbar sind. Die Antriebsmotoren können beispielsweise unterhalb der Bandkassette angeordnet werden und an dem Unterbau, insbesondere an der Maschine, verbleiben, wenn die Bandkassette entnommen wird.

Es ist gemäß einem Ausführungsbeispiel möglich, dass in Förderrichtung gesehen wenigstens ein Antrieb linksseitig und wenigstens ein weiterer Antrieb rechtsseitig mit der Bandkassette gekoppelt ist. Vorzugweise umfassen die Antriebe dabei jeweils einen Antriebsmotor, wobei insbesondere die Antriebsmotoren quer zur Förderrichtung gesehen nebeneinander unterhalb der Bandkassette mit zur jeweiligen Seite nach außen weisenden Antriebswellen angeordnet sind.

Besonders vorteilhaft ist dieses Konzept für einen zweispurigen Slicer, da jede der beiden zur Verfügung stehenden Seiten für den Antrieb der betreffenden Spur genutzt werden kann, d.h. ein Antrieb für die linke Spur und ein Antrieb für die rechte Spur. Gleichwohl ist dieses Konzept auch für Slicer mit mehr als zwei Spuren einsetzbar. Gegebenenfalls kann hierzu eine gestaffelte Anordnung der Antriebsmotoren in Förderrichtung gesehen hintereinander vorgesehen sein, um jeder Spur einen separaten Antrieb zuzuordnen.

Es kann vorgesehen sein, dass die Koppelung zwischen den Antrieben und der Bandkassette zumindest für eine Mehrzahl von Antrieben - und insbesondere für alle Antriebe - gleichzeitig aufhebbar und herstellbar ist. Dies kann beispielsweise mittels einer durchgehenden Welle erfolgen, die nur von einer Seite der Bandkassette aus betätigt zu werden braucht, gleichzeitig aber mit allen insbesondere quer zur Förderrichtung gesehen nebeneinander angeordneten Antriebsmotoren verbunden ist.

Die Bandkassette kann beispielsweise eine Förderbreite aufweisen, die im Bereich von etwa 300 mm bis 700 mm liegt.

Als Fördermittel für die Bandkassette können Endlosbänder oder Endlosgurte vorgesehen sein, wobei alternativ eine Vielzahl paralleler Endlosriemen als Fördermittel dienen kann.

Eine besonders einfache Handhabung der Bandkassette ergibt sich, wenn gemäß einem weiteren Ausführungsbeispiel die Bandkassette werkzeuglos entnehmbar und/oder einbaubar ist.

In einer weiteren Ausgestaltung der Erfindung kann vorgesehen sein, dass zur Entnahme und/oder zum Einbau der Bandkassette bei aufgehobener Verriegelung zwischen der Bandkassette und einer am Unterbau bzw. an der Maschine verbleibenden Aufnahme die Bandkassette zunächst mit einer Komponente in oder gegen die Förderrichtung relativ zur Aufnahme bewegbar und anschließend von der Aufnahme abhebbar ist. Die Bewegung der Bandkassette in oder gegen die Förderrichtung kann für eine besonders stabile und sichere Befestigung der Bandkassette an der Maschinenaufnahme sorgen. Außerdem ist eine solche Ausgestaltung dann von Vorteil, wenn die Einbausituation ein unmittelbares Anheben oder Verschwenken aus der Einbauposition heraus nicht zulässt. Die Bandkassette kann dann zur Entnahme vor der eigentlichen Herausnahme in oder gegen die Förderrichtung verschoben werden bzw. beim Einbau der Bandkassette kann eine solche Verschiebung zum Erreichen der endgültigen Einbauposition vorgenommen werden.

In einer alternativen Ausgestaltung kann vorgesehen sein, dass zur Entnahme und/oder zum Einbau der Bandkassette bei aufgehobener Verriegelung zwischen der Bandkassette und einer am Unterbau oder an der Maschine verbleibenden Aufnahme die Bandkassette zunächst um eine von zwei Auflagen der Aufnahme verschwenkbar und anschließend von den Auflagen abhebbar ist. Dabei kann insbesondere vorgesehen sein, dass diejenige Auflage, die nicht zum Verschwenken der Bandkassette dient, dazu ausgebildet ist, für eine Verriegelung der Bandkassette zu sorgen.

Eine besonders einfache und kostengünstige Ausgestaltung ergibt sich, wenn es sich bei den Auflagen um stangenförmige Komponenten handelt. Eine solche Ausführung benötigt wenig Platz, ist ausreichend stabil und gestattet eine in konstruktiver Hinsicht einfache Umsetzung der gewünschten Verschwenkbewegung einerseits und der Aufhebung und Herstellung der gewünschten Verriegelung der Bandkassette andererseits.

In einem weiteren Ausführungsbeispiel können mehrere Bandkassetten in Förderrichtung gesehen hintereinander und/oder nebeneinander angeordnet sein. Dabei ist insbesondere vorgesehen, dass die Bandkassetten unabhängig voneinander entnehmbar und/oder einbaubar sind.

Folglich ist die Erfindung nicht auf solche Vorrichtungen, insbesondere Slicer oder Fördereinrichtungen, beschränkt, bei denen nur eine einzige entnehmbare Bandkassette vorgesehen ist.

Hinsichtlich vorteilhafter Weiterbildungen dieser Fördereinrichtung wird auf die vorstehenden Ausführungen Bezug genommen. Die bevorzugten Ausgestaltungen der hier offenbarten Aufschnittschneidemaschine werden hiermit auch für die Fördereinrichtung beansprucht.

Die Erfindung wird im Folgenden beispielhaft unter Bezugnahme auf die Zeichnung beschrieben. Es zeigen:
- Fig. 1 bis 5: verschiedene Ansichten einer ersten Ausführungsform,
- Fig. 6: eine Ausführungsform der Erfindung,
- Fig. 7: schematisch eine weitere Ausführungsform,
- Fig. 8 bis 10: verschiedene Ansichten einer weiteren Ausführungsform.
- Fig. 11, 12a, 12b, 13a und 13b: verschiedenen Ansichten einer weiteren Ausführungsform der Erfindung, und
- Fig. 14a und 14b: schematische Ansichten einer weiteren Ausführungsform der Erfindung.

Bei den nachfolgend beschriebenen Ausführungsbeispielen von Bandförderern handelt es sich um Bestandteile von Fördereinrichtungen oder Aufschnittschneidemaschinen für Lebensmittelprodukte.

Die gezeigten Bandförderer umfassen jeweils einen einzigen oder zwei unmittelbar hintereinander angeordnete Einzelförderer und sind für einen Mehrspurbetrieb ausgelegt. Jeder Bandförderer umfasst eine entnehmbare Bandkassette 13 und einen Unterbau 41 mit einer Aufnahme 11 für die Bandkassette 13, wobei der Unterbau 41 des Bandförderers in eine Aufschnittschneidemaschine, insbesondere einen Hochleistungs-Slicer, oder in eine Fördereinrichtung integriert werden kann, die ein Bestandteil einer Produktionslinie ist und dabei insbesondere einem Hochleistungs-Slicer zugeordnet ist.

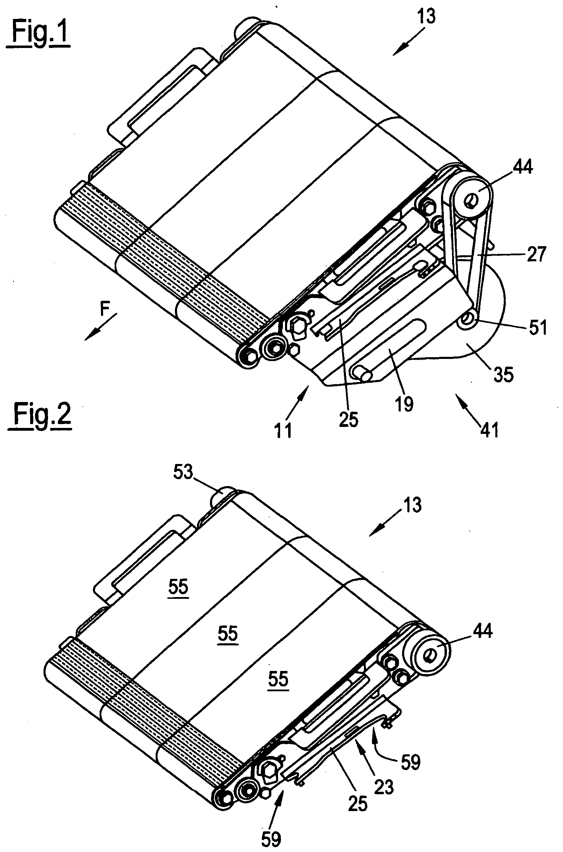

Die hierin beschriebenen Ausführungsbeispiele unterscheiden sich hinsichtlich verschiedener Aspekte: Die Fig. 1 bis 5 beschreiben einen einspurigen Traktionsförderer, bei dem die Bandkassette 13 als Traktionsband ausgebildet ist. Ein solcher Traktionsförderer ist insbesondere Bestandteil einer Produktzuführung eines Slicers, mit der ein oder mehrere aufzuschneidende Lebensmittelprodukte gemeinsam einer Schneidebene zugeführt werden.

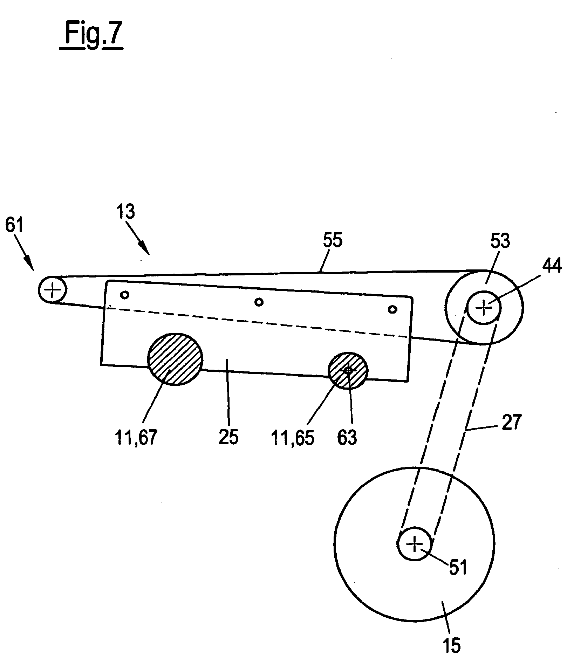

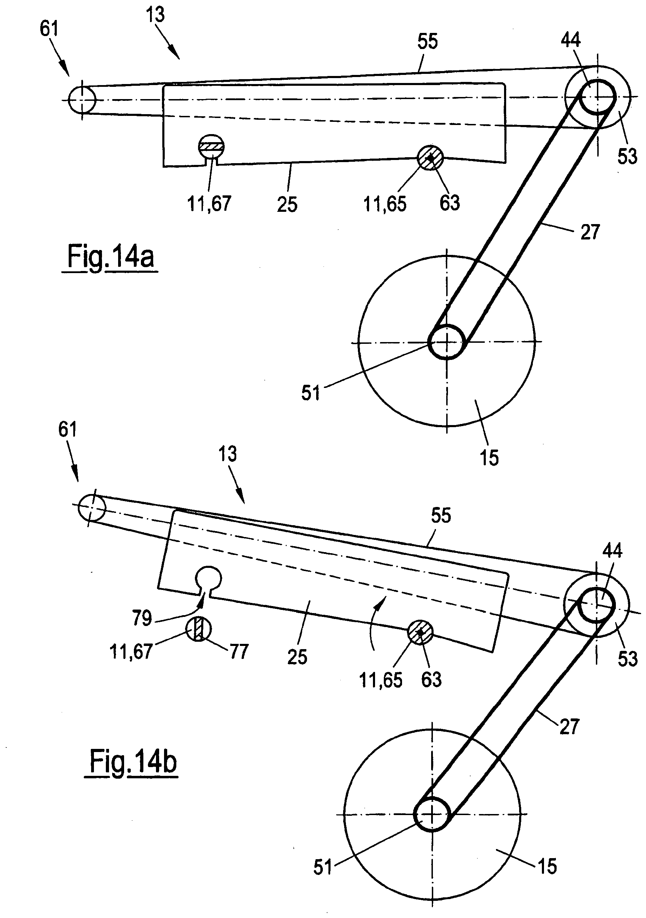

Die Fig. 7 sowie 14a und 14b zeigen jeweils schematisch eine Konzeptvariante, bei der die Koppelung zwischen Antrieb 15 und Bandkassette 13 durch eine Entnahme- bzw. Einbaubewegung der Bandkassette 13 bewirkt wird. Diese Koppelung bzw. Entkoppelung erfolgt dagegen bei den anderen Ausführungsbeispielen gleichzeitig mit der Herstellung bzw. der Aufhebung einer Verriegelung der Bandkassette 13 am Unterbau 41.

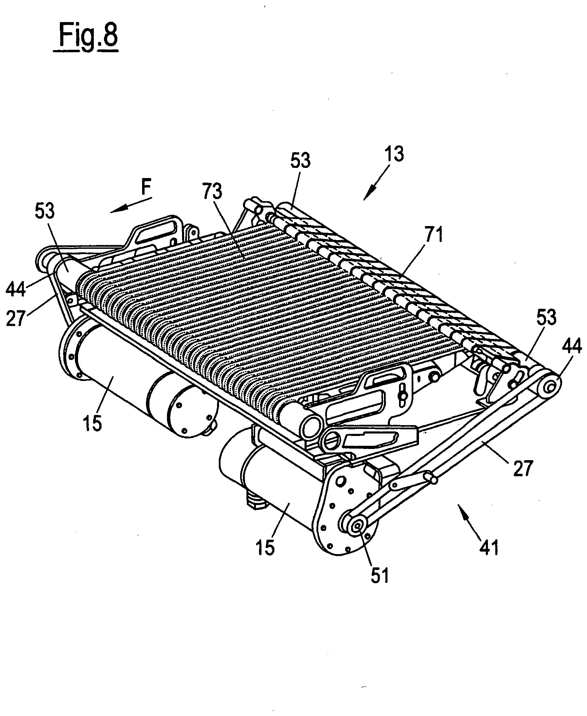

Das Ausführungsbeispiel der Fig. 8 bis 10 betrifft einen einspurigen Portionierförderer, bei dem eine einzige entnehmbare Bandkassette 13 zwei Einzelförderer umfasst, nämlich ein kurzes Portionierband 71 und ein langes Portionierband 73.

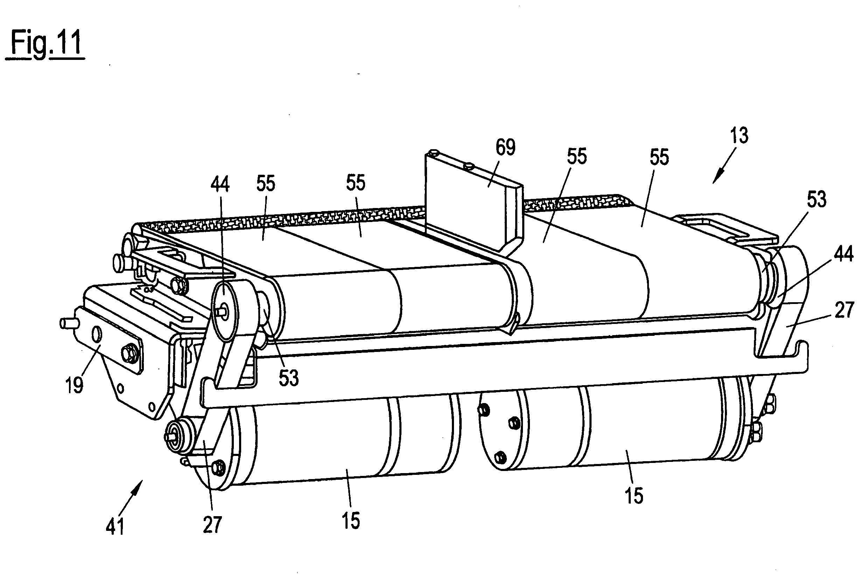

Das Ausführungsbeispiel der Fig. 11 bis 13 zeigt einen zweispurigen Traktionsförderer mit einer zweispurigen Bandkassette 13.

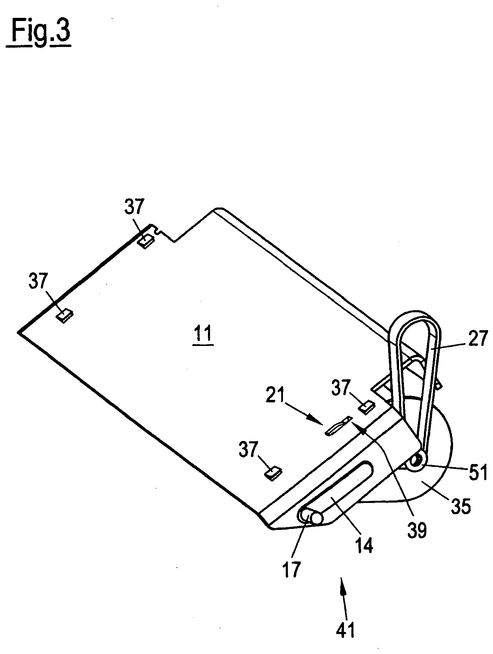

Fig. 1 zeigt die einspurige Traktionsbandkassette in ihrer Einbauposition an einem nicht dargestellten Slicer, wobei in der Einbausituation die Bandkassette 13 an einer Aufnahme 11, die hier als Tisch oder Platte ausgebildet ist (vgl. Fig. 3), angebracht und verriegelt ist.

Fig. 2 zeigt die Bandkassette 13 im entnommenen Zustand.

Fig. 3 zeigt die Aufnahme 11 nach Entnahme der Bandkassette 13. Die Aufnahme 11 ist an ihrer Oberseite mit am linken Randbereich und am rechten Randbereich angeordneten Koppelementen 37 versehen, die pilzförmig ausgebildet sind und dazu dienen, von einer Basis 25 (vgl. Fig. 2) der Bandkassette 13 hintergriffen zu werden, die hierzu mit entsprechenden Aussparungen 59 versehen ist.

Des Weiteren ist in der Aufnahme 11 an einer Seite im Bereich zwischen zwei Koppelelementen 37 ein Schlitz 39 ausgebildet, durch den sich von unten ein Verriegelungsorgan 21 hindurch erstreckt, das dazu dient, mit einem in der Basis 25 der Bandkassette 13 ausgebildeten Schlitz 23 zusammenzuwirken, um die Bandkassette 13 an der Aufnahme 11 zu verriegeln.

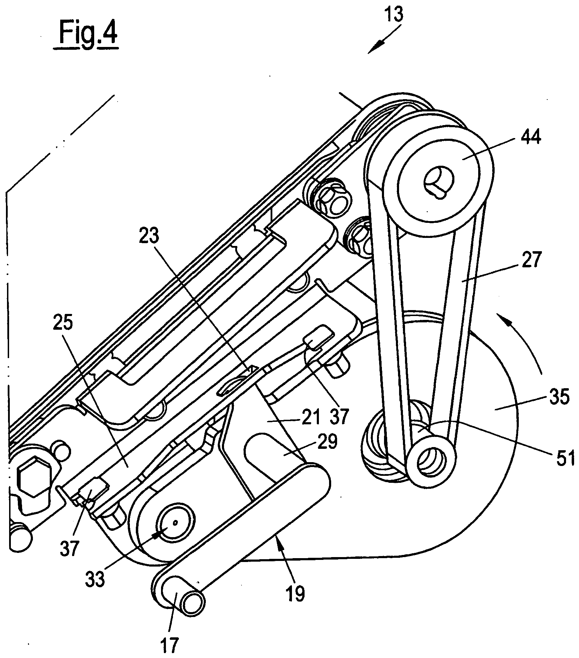

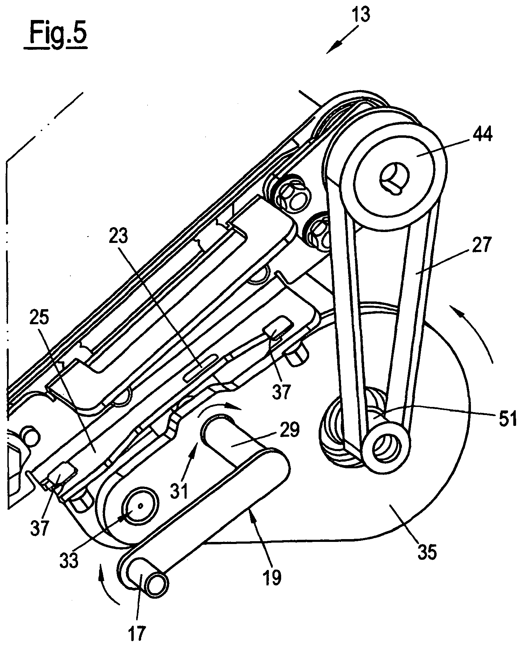

Das Verriegelungsorgan 21 ist Bestandteil einer Verriegelung, die außerdem unter anderem einen Hebel 19 mit einem Zapfen 17 umfasst. Diese Betätigungseinrichtung wird nachstehend näher in Verbindung mit den Fig. 4 und 5 beschrieben.

Der Unterbau 41, zu welcher die Aufnahme 11 gehört, ist des Weiteren mit einem unterhalb der Auflage 11 angeordneten Antriebsmotor für die Bandkassette 13 versehen, von dem lediglich eine Antriebswelle 51 dargestellt ist. Bei eingebauter Bandkassette 13 treibt die Antriebswelle 51 mittels eines Antriebsriemens 27 ein Antriebsrad 44 (vgl. Fig. 1) der Bandkassette 13 an. Das Antriebsrad 44 ist koaxial und seitlich neben einer Bandrolle 53 der Bandkassette 13 angeordnet, um welche als Fördermittel dienende und eine Produktauflagefläche definierende Endlosbänder 55 geführt sind.

Im eingebauten Zustand gemäß Fig. 1, in welchem die Bandkassette 13 mit ihrer Basis 25 die Koppelelemente 37 hintergreift und durch die Verriegelung 21 gesichert und somit in einer definierten Betriebsposition am Unterbau 41 angebracht ist, besteht folglich eine direkte Antriebsverbindung zwischen Antriebsmotor und Bandkassette 13 über den Antriebsriemen 27, der um die Antriebswelle 51 des Motors und das Antriebsrad 44 der Bandkassette 13 umläuft.

Das Zusammenspiel zwischen Bandkassette 13 und Unterbau 41 zeichnet sich insbesondere durch drei Vorgänge aus, nämlich (i) die zur Entnahme und zum Einbau der Bandkassette 13 erforderlichen Bewegungen der Bandkassette 13, (ii) die Entriegelung und die Verriegelung der Bandkassette 13 sowie (iii) das Aufheben und das Herstellen der Koppelung zwischen dem Antrieb 15 und der Bandkassette 13.

Hierzu wird im Folgenden auch auf die Fig. 4 und 5 Bezug genommen. Fig. 4 zeigt die Bandkassette 13 im eingebauten Zustand, wobei zur besseren Veranschaulichung die Aufnahmeplatte 11 weggelassen wurde, um die Betätigungseinrichtung besser darstellen zu können. Fig. 5 entspricht der Darstellung in Fig. 4, wobei hier zusätzlich das Verriegelungsorgan 21 weggelassen wurde, um eine Welle 29 des Hebels 19 besser darstellen zu können.

Um die Bandkassette 13 von dem Unterbau 41 und somit vom Aufnahmetisch 11 abnehmen zu können, muss die Bandkassette 13 mit ihrer Basis 25 außer Eingriff mit den Koppelelementen 37 gebracht werden, und zwar durch eine Verschiebebewegung entgegen der Förderrichtung F (vgl. Fig. 1).

Diese Entnahmebewegung ist nur möglich, wenn zuvor sowohl der Verriegelungszustand als auch der Koppelungszustand des Antriebs 15 aufgehoben wurden, d.h. eine Entnahme der Bandkassette 13 ist nur nach vorheriger Entriegelung der Basis 25 und Entspannung des Riemens 27 möglich.

Diese beiden Vorgänge werden gleichzeitig mit Hilfe der manuellen Betätigungseinrichtung durchgeführt. Hierzu wird zunächst von einem Benutzer der Hebel 19 über den Zapfen 17 etwas nach außen gezogen, wodurch ein formschlüssiger Eingriff (vgl. Fig. 1) des Zapfens 17 mit der Aufnahme 11, der eine unbeabsichtigte Entriegelung verhindert, aufgehoben wird. Der Hebel 19 kann dann vom Benutzer etwa um 180° im Uhrzeigersinn verschwenkt werden. Hierdurch gibt das zunächst noch im Schlitz 23 der Basis 25 sitzende Verriegelungsorgan 21 die Basis 25 und somit die Bandkassette 13 frei. Außerdem wird durch das Verschwenken des Hebels 19 gleichzeitig eine um eine Achse 33 schwenkbar gelagerte, mit dem Antriebsmotor verbundene Schwinge 35 im Gegenuhrzeigersinn bewegt, wodurch der Antriebsriemen 27 entspannt und vom Antriebsrad 44 der Bandkassette 13 abgenommen werden kann.

Die Schwenkbewegung der Schwinge 35 wird durch die exzentrisch ausgebildete Welle 29 des Hebels 19 bewirkt, die sich durch eine in der Schwinge 35 ausgebildete Aussparung 31 hindurch erstreckt. Folglich sind die Aussparung 31 der Schwinge 35 und die Hebelwelle 29 im Bereich dieser Aussparung 31 derart ausgebildet, dass die Welle 29 gewissermaßen nach Art einer Kurbelwelle bei Drehung aufgrund ihrer Exzentrizität die Schwinge 35 in einer definierten Weise je nach Drehrichtung gegen den Uhrzeigersinn (zum Entspannen des Riemens 27) oder im Uhrzeigersinn (zum Spannen des Riemens 27) verschwenkt.

Das Verschwenken des Hebels 19 im Uhrzeigersinn hat also zweierlei zur Folge: Zum einen erfolgt eine Entriegelung der Bandkassette 13 und zum anderen erfolgt eine Entspannung des Antriebsriemens 27. Beides ist erforderlich, um die Bandkassette 13 und somit deren Basis 25 außer Eingriff mit den Koppelelementen 37 der Aufnahme 11 zu bewegen und dann entnehmen zu können.

Der Einbau der Bandkassette 13 erfolgt in umgekehrter Reihenfolge. Zunächst wird die Bandkassette 13 mit ihrer Basis 25 auf die Auflageplatte 11 aufgesetzt und dann durch eine Verschiebebewegung in Förderrichtung F in Eingriff mit den Koppelelementen 37 gebracht, um die Koppelelemente 37 im Bereich der Aussparungen 59 mittels der Basis 25 zu hintergreifen. Anschließend wird der Antriebsriemen 27 um das Antriebsrad 44 der Bandkassette 13 gelegt, was in dieser Situation möglich ist, da der Antriebsriemen 27 noch nicht gespannt ist. Daraufhin wird der Hebel 19 um etwa 180° gegen den Uhrzeigersinn zurück in die Ausgangsstellung gemäß Fig. 4 und 5 geschwenkt. Hierdurch wird die Schwinge 35 im Uhrzeigersinn verschwenkt, wodurch der Riemen 27 gespannt wird. Gleichzeitig wird durch das Verschwenken des Hebels 19 das drehfest mit der Hebelwelle 29 verbundene Verriegelungsorgan 21 mit seinem hakenförmigen freien Eingriffsende von unten durch den in der Basis 25 der Bandkassette 13 ausgebildeten Schlitz 23 hindurch geschwenkt und in verriegelnden Eingriff mit der Schlitzbegrenzung gebracht.

Die Bandkassette 13 ist dann betriebsbereit und kann durch entsprechende Ansteuerung des Antriebsmotors 23 in der gewünschten Weise betrieben werden.

Hinsichtlich dieses Zusammenspiels wird auch auf die anderen hier beschriebenen Ausführungsbeispiele (mit Ausnahme des anhand der Fig. 7 sowie 14a und 14b erläuterten Prinzips) verwiesen, die auf dem gleichen Grundkonzept beruhen.

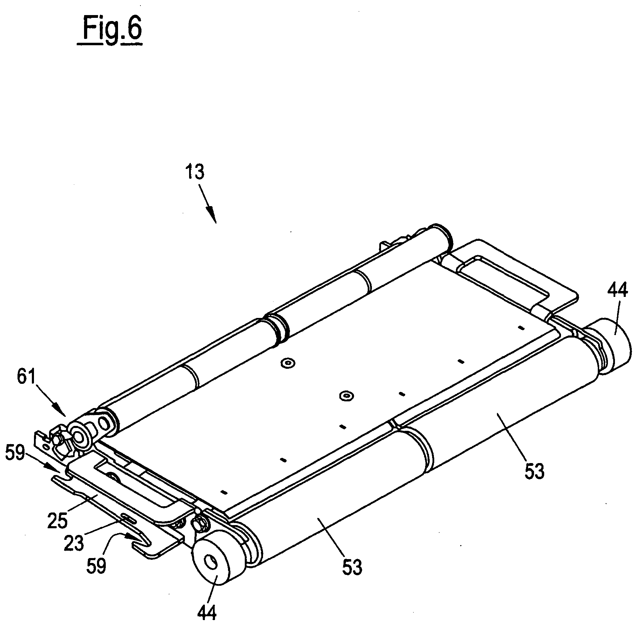

Die im Ausführungsbeispiel der Fig. 6 dargestellte Bandkassette 13 ist für einen zweispurigen Betrieb ausgelegt. Die Bandkassette 13 ist hier im entnommenen Zustand und mit abgenommenen Bandfördergurten dargestellt. Des Weiteren ist eine vordere Bandumlenkung 61 der Bandkassette 13 in einem hochgeklappten Zustand dargestellt.

Im hinteren Antriebsbereich der Bandkassette 13 sind zwei Bandrollen 53 axial nebeneinander und somit auf einer gemeinsamen Achse liegend nebeneinander angeordnet. Jeder Bandrolle 53 ist axial außen entsprechend dem Ausführungsbeispiel der Fig. 1 bis 5 ein Antriebsrad 44 zugeordnet, mit dem ein Antriebsmotor über einen Antriebsriemen 27 gekoppelt werden kann, wie es ebenfalls in Verbindung mit dem Ausführungsbeispiel der Fig. 1 bis 5 beschrieben wurde.

Außerdem ist wie beim Ausführungsbeispiel der Fig. 1 bis 5 an jeder Seite der Bandkassette 13 eine Basis 25 mit Aussparungen 59 und einem Schlitz 23 angeordnet, um an einer entsprechend ausgebildeten Aufnahme verriegelt werden zu können.

Die Einbausituation sowie die Entnahme und der Einbau einer solchen zweispurigen Bandkassette werden nachstehend näher in Verbindung mit den Fig. 11, 12a, 12b, 13a und 13b beschrieben.

Während bei den bisher anhand der Figuren beschriebenen Ausführungsformen eine Betätigungseinrichtung vorgesehen ist, um gleichzeitig die Bandkassette zu entriegeln bzw. zu verriegeln und den Antriebsriemen zu entspannen bzw. zu spannen, ist bei dem schematisch in Fig. 7 dargestellten Ausführungsbeispiel vorgesehen, dass bei Entnahme der Bandkassette 13 zunächst eine Entriegelung einer Basis 25 der Bandkassette 13 erfolgt und erst danach gleichzeitig eine Entnahmebewegung der Bandkassette 13 durchgeführt und der Antriebsriemen 27 entspannt wird.

Die Aufnahme 11 des Unterbaus umfasst hier zwei Auflagestangen 65, 67. Um die hier rechte Auflagestange 65 bzw. deren eine Schwenkachse 63 definierende Mittelachse ist die Bandkassette 13 mit ihrer Basis 25 zur Entnahme bzw. zum Einbau schwenkbar gelagert.

In der dargestellten Einbauposition liegt die Bandkassette 13 mit ihrer Basis 25 auf beiden Auflagestangen 65, 67 auf, wobei die hier linke, vordere Auflagestange 67 außerdem dazu ausgebildet ist, die Basis 25 in der Einbausituation zu verriegeln. Hierauf wird näher in Verbindung mit dem Ausführungsbeispiel der Fig. 14a, 14b eingegangen, das ebenfalls auf dem vorstehend erläuterten Prinzip beruht.

Die relative Anordnung von Antriebsmotor 15 mit Antriebswelle 51 einerseits und Antriebsrad 44 sowie Bandrolle 53 der Bandkassette 13 andererseits entspricht den bisher beschriebenen Ausführungsbeispielen. Im vorliegenden Ausführungsbeispiel der Fig. 7 ist es jedoch eine Bewegung der Bandkassette 13 selbst, die für eine Reduzierung des Abstandes zwischen der Achse der Antriebswelle 51 und der Achse des Antriebsrades 44 und somit für eine Entspannung des Riemens 27 zur Entnahme der Bandkassette 13 sorgt. Im Gegensatz zu den vorstehend beschriebenen Ausführungsbeispielen, bei denen zur Entspannung und Spannung des Riemens der Antriebsmotor 15 samt Antriebswelle 51 bewegt wird, ist im Ausführungsbeispiel der Fig. 7 vorgesehen, dass der Motor 15 feststehend angeordnet und die Abstandsänderung zwischen stationärer Antriebswelle 51 und Antriebsrad 44 durch die erläuterte Bewegung der Bandkassette 13 bewirkt wird.

Das Ausführungsbeispiel der Fig. 8 bis 10 zeigt die Umsetzung an einem Portionierförderer.

Die Bandkassette 13 ist als Portionierband mit zwei in Förderrichtung gesehen unmittelbar hintereinander angeordneten Einzelförderern 71, 73 ausgebildet. Das in Förderrichtung F gesehen hintere Portionierband 71, auf welches während des Schneidebetriebs die abgeschnittenen Produktscheiben zur Bildung von Portionen fallen, ist sehr kurz ausgeführt und um ein Vielfaches kürzer als das nachfolgende zweite Portionierband 73, bei dem als Fördermittel eine Vielzahl von parallel verlaufenden Endlosrundriemen vorgesehen ist. Das erste Portionierband 71 weist als Fördermittel eine Vielzahl paralleler schmaler Bandgurte auf.

Der Unterbau 41 dieses Portionierförderers ist anders ausgebildet als beispielsweise der Unterbau 41 des im Ausführungsbeispiel der Fig. 1 bis 5 beschriebenen Traktionsbandes. Gleichwohl können die Entriegelung und Verriegelung sowie die Entnahme und der Einbau der Bandkassette 13 an diesem Unterbau 41 zumindest hinsichtlich des Grundkonzepts so erfolgen, wie bei dem zuvor beschriebenen Traktionsband. In den Fig. 8 bis 10 ist eine entsprechende Betätigungseinrichtung mit einem Hebel 19 und einer durchgehenden Welle 29, die Verriegelungsorgane 21 trägt, dargestellt. Hierauf wird nachstehend näher eingegangen.

Eine Besonderheit der Portioniereinheit gemäß den Fig. 8 bis 10 besteht darin, dass eine einzige, als Ganzes handhabbare und somit als Ganzes entnehmbare und einbaubare Bandkassette 13 mehr als einen Bandförderer aufweist, wobei die mehreren - hier die zwei - Bandförderer 71, 73 unabhängig voneinander betreibbar sind, da am Unterbau 41 dieser Portioniereinheit zwei separate Antriebsmotoren 15 angeordnet sind, die jeweils einem der Portionierbänder 71, 73 zugeordnet und unabhängig voneinander ansteuerbar sind, so dass die beiden Portionierbänder 71, 73 vollkommen unabhängig voneinander betrieben werden können.

Die beiden Antriebsmotoren 15 sind Platz sparend in den Unterbau 41 integriert und somit unterhalb der Bandkassette 13 angeordnet, wobei die beiden Motoren 15 in Förderrichtung gesehen auf gleicher Höhe und in Querrichtung nebeneinander angeordnet sind und die Antriebswellen 51 jeweils nach außen weisen.

Die beiden Portionierbänder 71, 73 weisen jeweils zum Antreiben der jeweiligen Fördermittel eine Bandrolle 53 auf, der jeweils entsprechend dem Ausführungsbeispiel der Fig. 1 bis 5 ein koaxiales Antriebsrad 44 zugeordnet ist. Die beiden Antriebsräder 44 sind jeweils mit einem der Antriebsmotoren 15 direkt verbunden, und zwar über einen Antriebsriemen 27, der um das jeweilige Antriebsrad 44 und die jeweilige Antriebswelle 51 umläuft.

Diese Portioniereinheit verwirklicht folglich bei sehr einfachem und äußerst kompaktem Grundaufbau einen hohen Funktionalitätsgrad.

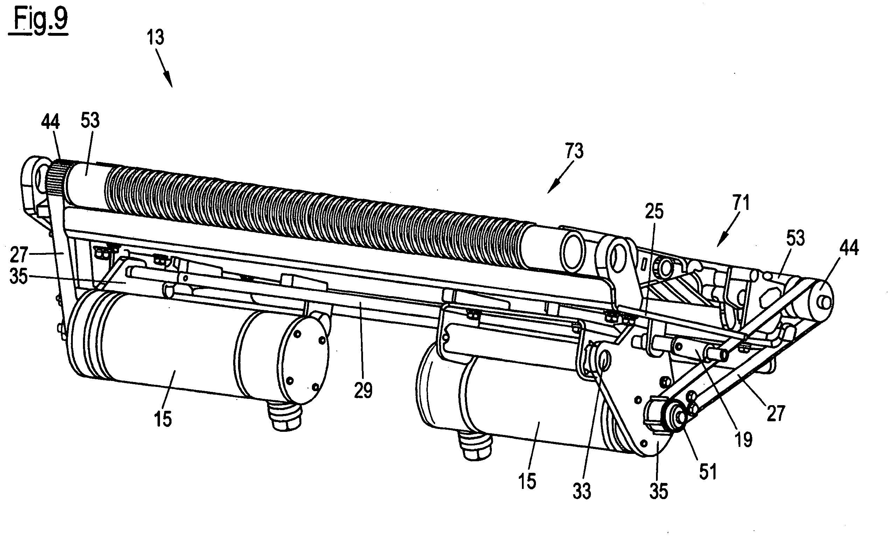

In der Darstellung der Fig. 9 sind insbesondere die beiden Antriebsmotoren 15 zu erkennen, von denen der eine das kurze Portionierband 71 und der andere das lange Portionierband 73 über einen jeweiligen Antriebsriemen 27 antreibt. Die direkte Koppelung mittels der Antriebsriemen 27 ermöglicht es, in Förderrichtung versetzt angeordnete Bandrollen 53 bzw. Antriebsräder 44 bei in Förderrichtung gesehen auf gleicher Höhe befindlichen Antriebsmotoren 15 bzw. Antriebswellen 51 anzutreiben. Dieses Konzept nutzt folglich den Umstand aus, dass die beiden Antriebsriemen 27 auf den beiden einander gegenüberliegenden Seiten der Portioniereinheit und somit ohne gegenseitige Störung oder Beeinflussung verlaufen können.

Die beiden Motoren 15 sind jeweils an einer Schwinge 35 befestigt, die um eine Achse 33 schwenkbar gelagert ist. Die Schwingen 35 sind jeweils mittels einer gemeinsamen Hebelwelle 29 verschwenkbar, die auf einer Seite der Portioniereinheit mit einem Hebel 19 verbunden ist. Im Bereich der Schwingen 35 ist die Welle 29 jeweils derart exzentrisch ausgebildet, dass durch Verdrehen der Welle 29 um etwa 180° mittels des Hebels 19 eine solche Schwenkbewegung gleichzeitig beider Schwingen 35 bewirkt wird, dass beide Riemen 27 gleichzeitig entspannt oder gespannt werden.

Durch eine einzige manuelle Betätigung über den Hebel 19 kann folglich ein Benutzer beide Motoren 15 gleichzeitig verschwenken und somit beide Portionsbänder 71, 73 gleichzeitig von ihrem jeweiligen Antrieb entkoppeln bzw. mit ihrem jeweiligen Antrieb koppeln. Eine Entnahme bzw. ein Einbau dieser Portionierkassette ist folglich schnell und einfach möglich.

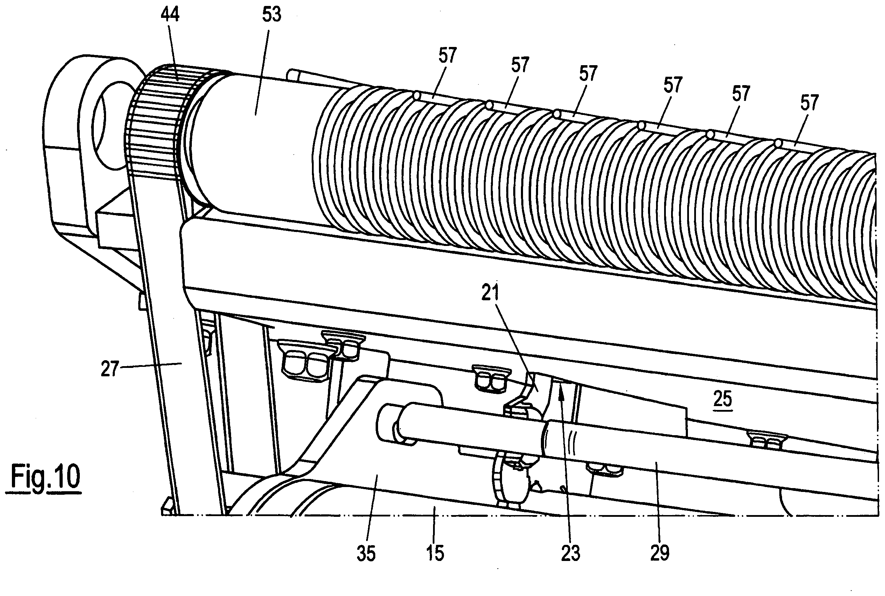

Die vergrößerte Darstellung eines Teils der Fig. 9 in Fig. 10 zeigt insbesondere im Bereich des in Fig. 9 linken Antriebsmotors 15 die Wirkungsweise der Hebelwelle 19. Die Exzentrizität der Welle 29 im Bereich der Schwinge 35 sorgt für die vorstehend erläuterte Verschwenkung des an der Schwinge 35 angebrachten Motors 15 beim Verdrehen der Welle 29. Ferner ist die Welle 29 drehfest mit zwei Verriegelungsorganen 21 verbunden, von denen in Fig. 10 lediglich eines dargestellt ist. Im dargestellten Einbauzustand greift das Verriegelungsorgan 21 durch einen in der Basis 25 der Bandkassette 13 ausgebildeten Schlitz 23 hindurch, um die Basis 25 und somit die Bandkassette 13 am Unterbau 41 zu verriegeln. Durch Verdrehen der Welle 29 und somit Verschwenken des Verriegelungsorgans 21 wird diese Verriegelung aufgehoben, während gleichzeitig durch Verschwenken der Schwinge 35 der Riemen 27 entspannt wird.

Den Fig. 8 bis 10 ist außerdem zu entnehmen, dass die Antriebsriemen 27 jeweils als Zahnriemen ausgebildet und die jeweils stirnseitig der betreffenden Bandrolle 53 angeordneten Riemenräder 44 jeweils in Form eines Zahnrades vorgesehen sind.

Bei dem zweispurigen Traktionsband gemäß den Fig. 11, 12a, 12b, 13a und 13b (vgl. auch die vorstehenden Ausführungen zu Fig. 6) ist für jede der beiden Spuren, zwischen denen hier eine Trennwand 69 angeordnet ist, ein Antriebsmotor 15 vorgesehen, der die betreffende Bandrolle 53 bzw. das stirnseitige Antriebsrad 44 über einen Riemen 27 antreibt.

Diese Traktionsbandeinheit ist folglich bezüglich einer senkrecht zu den Produktauflageflächen der Endlosbänder 55 verlaufenden Mittelebene zwischen den beiden Spuren spiegelbildlich ausgeführt, wobei aber beide Spuren an einer einzigen, als Ganzes handhabbaren Bandkassette 13 ausgebildet sind.

Die Entnahme und der Einbau dieser Bandkassette 13 einschließlich der Verriegelung am Unterbau 41 sowie des Entspannens und des Spannens der Antriebsriemen 27 erfolgen wie beim Ausführungsbeispiel der Fig. 1 bis 5, was nachstehend näher erläutert wird.

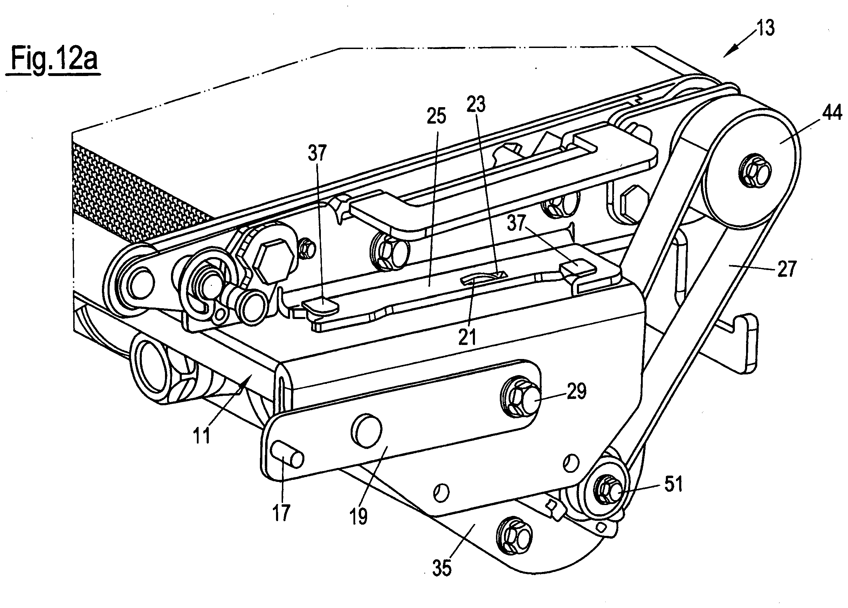

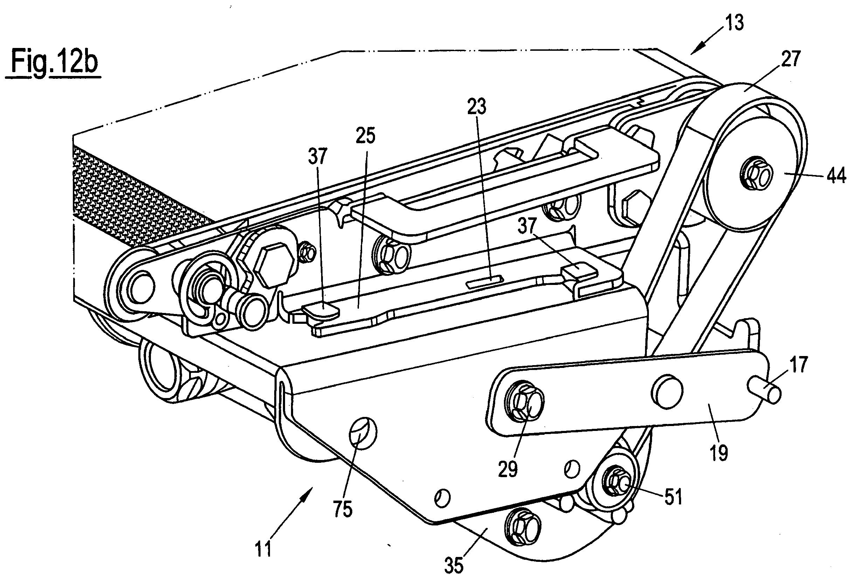

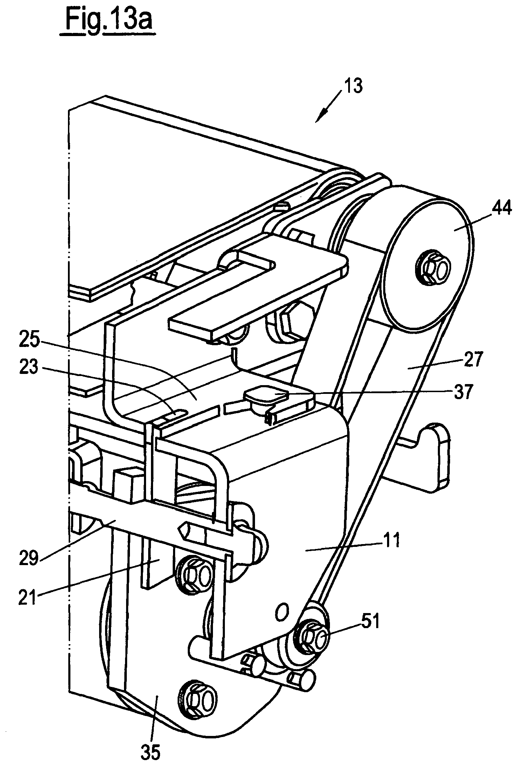

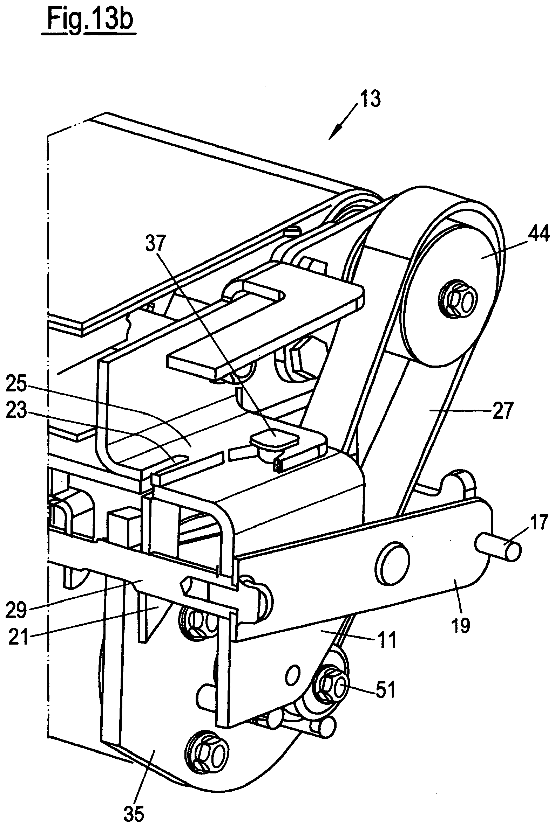

Die Fig. 12a und 13a zeigen jeweils die Betriebsposition mit gespanntem Antriebsriemen 27, während die Fig. 12b und 13b jeweils eine Situation zeigen, in der die Antriebsriemen 27 entspannt sind und die Bandkassette 13 entriegelt ist, wobei die Basis 25 der Bandkassette 13 noch in Eingriff mit den Koppelelementen 37 der Aufnahme 11 steht.

Der Vergleich der Fig. 12a und 12b zeigt insbesondere, dass der Hebel 19 um etwa 180° im Uhrzeigersinn zu verschwenken ist, um das Verriegelungsorgan 21 außer Eingriff mit dem Schlitz 23 in der Basis 25 der Bandkassette 13 zu bringen, und die Schwinge 35 gegen den Uhrzeigersinn zu verschwenken, um den Riemen 27 zu entspannen.

Die Fig. 13a und 13b zeigen jeweils einen Schnitt senkrecht zur Förderrichtung durch die Welle 29 des Hebels 19. Zu erkennen sind insbesondere die exzentrische Ausgestaltung der Welle 29 im Bereich der Schwinge 35 und das Zusammenwirken der Welle 29 mit dem Verriegelungsorgan 21, das in der Einbausituation gemäß Fig. 13a in verriegelndem Eingriff mit der Basis 25 der Bandkassette 13 im Bereich des Schlitzes 23 steht und sich im entriegelten Zustand gemäß Fig. 13b außer Eingriff mit der Basis 25 der Bandkassette 13 befindet.

Den Fig. 12b und 13b ist außerdem zu entnehmen, dass durch das Verschwenken der Schwinge 35 und somit der Antriebswelle 51 des Motors in Richtung des Antriebsrades 44 der Bandkassette 13 und die dadurch bewirkte Abstandsreduzierung zwischen Antriebswelle 51 und Antriebsrad 44 der Riemen 27 entspannt wird und somit außer Eingriff mit dem Antriebsrad 44 gelangt bzw. nur noch locker um das Antriebsrad 44 gelegt ist, so dass der Riemen 27 mühelos vom Antriebsrad 44 abgenommen und die Bandkassette 13 einfach durch Verschieben außer Eingriff mit den Koppelelementen 37 der Aufnahme 11 gebracht und dann abgehoben werden kann.

Wie bereits vorstehend in Verbindung mit Fig. 7 erwähnt, zeigen die Fig. 14a und 14b schematisch ein anderes Entnahmekonzept für eine Bandkassette 13, die auch bei diesem Konzept beispielsweise als Portionierband oder Traktionsband ausgebildet und jeweils mehrspurig ausgeführt sein kann.

In Fig. 14a und 14b ist rein beispielhaft dargestellt, wie die hier linke Auflagestange 67 der Aufnahme 11 bzw. des Unterbaus 41 ausgebildet sein kann, um nicht nur als Auflage für die Basis 25 der Bandkassette 13, sondern außerdem zur Verriegelung der Bandkassette 13 am Unterbau dienen zu können.

Hierzu ist die Basis 25 im Bereich eines Verriegelungsabschnitts 77 der Auflagestange 67 mit einer schlüssellochartig geformten Aufnahme 79 versehen, in welche der Verriegelungsabschnitt 77 nur in einer einer Entriegelungsposition entsprechenden Drehstellung der Auflagestange 67 gelangen kann, wie dies in Fig. 14b dargestellt ist.

In der Verriegelungsstellung gemäß Fig. 14a ist der in der Aufnahme 79 befindliche Verriegelungsabschnitt 77 derart orientiert, dass der Verriegelungsabschnitt 77 nicht aus der Aufnahme 79 herausgelangen kann. Die Bandkassette 13 ist folglich in dem Zustand gemäß Fig. 14a in der Einbausituation bzw. Betriebsstellung verriegelt und gesichert.

Zur Entnahme der Bandkassette 13 wird zunächst die hier linke Auflagestange 67 in die Stellung gemäß Fig. 14b gedreht, so dass der Verriegelungsabschnitt 77 aus der Ausnahme 79 herausgelangen kann, wenn die Bandkassette 13 um die andere Auflagestange 65 verschwenkt wird.

Dieses Verschwenken der Bandkassette 13 bewirkt eine Abstandsverringerung zwischen dem Antriebsrad 44 der Bandkassette 13 und der Antriebswelle 51 des Motors 15, wodurch der Antriebsriemen 27 entspannt wird. Die zum Zwecke dieser Riemenentspannung verschwenkte Bandkassette 13 kann dann von der Auflagestange 65 abgehoben werden.

### Bezugszeichenliste

- 11: Aufnahme
- 13: Bandkassette
- 15: Antriebsmotor
- 17: Zapfen
- 19: Hebel
- 21: Verriegelungsorgan, Verriegelung
- 23: Schlitz
- 25: Basis
- 27: Antriebsriemen
- 29: Hebelwelle
- 31: Aussparung der Schwinge
- 33: Schwenkachse der Schwinge
- 35: Schwinge
- 37: Koppelelement der Aufnahme
- 39: Schlitz
- 41: Unterbau
- 44: Antriebsrad, Riemenrad
- 51: Antriebswelle des Antriebsmotors
- 53: Bandrolle der Bandkassette
- 55: Endlosband, Endlosgurt
- 57: Endlosriemen, Rundriemen
- 59: Aussparung der Basis der Bandkassette
- 61: Bandumlenkung
- 63: Schwenkachse der Auflagestange
- 65: Auflagestange
- 67: Auflagestange
- 69: Trennwand
- 71: erster Förderer, kurzes Portionierband
- 73: zweiter Förderer, langes Portionierband
- 77: Verriegelungsabschnitt
- 79: Aufnahme

- F: Förderrichtung

## Patentansprüche

1. Aufschnittschneidemaschine für Lebensmittelprodukte, insbesondere Hochleistungs-Slicer, mit zumindest einem Bandförderer, der als entnehmbare Bandkassette (13) ausgeführt ist,
**dadurch gekennzeichnet,**
**dass** die Bandkassette (13) für einen Mehrspurbetrieb ausgelegt und mit mehreren unabhängigen Antrieben (15) koppelbar ist, die jeweils zumindest einer Spur zugeordnet sind, und
**dass** die Bandkassette (13) eine unterhalb von umlaufenden Förderbändern oder Förderriemen angeordnete Basis (25) aufweist, mit der die Bandkassette (13) mechanisch an einem Unterbau (41) des Bandförderers anbringbar ist, der eine an die Basis (25) der Bandkassette (13) angepasste Aufnahme (11) aufweist und bei Entnahme der Bandkassette (13) vor Ort verbleibt,
wobei die Basis (25) den kassettenseitiqen Teil einer mechanischen Schnittstelle zwischen Bandkassette (13) und Unterbau (41) darstellt und die Aufnahme (11) den stationären Teil der mechanischen Schnittstelle zwischen Bandkassette (13) und Unterbau (41) bildet.

2. Maschine nach Anspruch 1,
**dadurch gekennzeichnet,**
**dass** die Bandkassette (13) in Förderrichtung gesehen vor der Schneidebene angeordnet und insbesondere als Traktionsband ausgebildet ist, oder dass die Bandkassette (13) in Förderrichtung gesehen hinter der Schneidebene angeordnet und insbesondere als Portionierband ausgebildet ist.

3. Maschine nach Anspruch 1 oder 2,
**dadurch gekennzeichnet,**
**dass** die Bandkassette (13) in Förderrichtung gesehen eine Band- oder Förderlänge aufweist, die weniger als 500mm, insbesondere weniger als 300mm, insbesondere weniger als 200mm und insbesondere zwischen 50mm und 150mm beträgt.

4. Maschine nach einem der vorhergehenden Ansprüche,
**dadurch gekennzeichnet,**
**dass** zumindest ein direkter Antrieb (15) für die Bandkassette (13) vorgesehen ist, und/oder
**dass** wenigstens ein Antriebsmotor (15) für die Bandkassette (13) direkt mit der Bandkassette (13) gekoppelt ist, insbesondere über eine Riemenverbindung oder über eine Zahnradanordnung, bevorzugt eine Zahnradpaarung, wobei insbesondere der Antriebsmotor (15) unterhalb der Bandkassette (13) angeordnet ist, und/oder
**dass** ein Antriebsmotor (15) für die Bandkassette (13) eine Antriebswelle (51) und die Bandkassette (13) ein Antriebsrad (44) aufweist, wobei die Antriebswelle (51) und das Antriebsrad (44) direkt miteinander gekoppelt sind, wobei insbesondere der Antriebsmotor (15) unterhalb der Bandkassette (13) angeordnet ist.

5. Maschine nach einem der vorhergehenden Ansprüche,
**dadurch gekennzeichnet,**
**dass** die Bandkassette (13) eine gelagerte Bandrolle (53) aufweist, wobei ein Antriebsrad (44) der Bandkassette (13) über die Lagerung der Bandrolle (53) gelagert ist,
wobei insbesondere das Antriebsrad (44) koaxial zur Bandrolle (53) und insbesondere axial neben der Bandrolle (53) angeordnet ist, und/oder dass zum Aufheben und Herstellen einer Koppelung zwischen einem Antriebsmotor (15) für die Bandkassette (13) und der Bandkassette (13) jeweils eine Relativbewegung zwischen Antriebsmotor (15) und Bandkassette (13) vorgesehen ist, insbesondere eine Schwenkbewegung,
wobei insbesondere durch die Relativbewegung der Abstand zwischen einer Antriebsachse, bevorzugt einer Antriebswelle (51), des Antriebsmotors (15) und einer Antriebsachse, bevorzugt einem Antriebsrad (44), der Bandkassette (13) veränderbar ist.

6. Maschine nach einem der vorhergehenden Ansprüche,
**dadurch gekennzeichnet,**
**dass** eine Koppelung zwischen einem Antrieb (15) für die Bandkassette (13) und der Bandkassette (13) durch Entspannen eines Antriebsriemens (27) aufhebbar und durch Spannen des Antriebsriemens (27) herstellbar ist, wobei das Entspannen und Spannen des Antriebsriemens (27) jeweils durch eine Relativbewegung zwischen Antrieb (15) und Bandkassette (13) vorgesehen ist, und/oder
**dass** für die Bandkassette (13) eine bei entnommener Bandkassette (13) an der Maschine verbleibende Aufnahme (11) vorgesehen ist, an der die Bandkassette (13) verriegelbar ist, wobei die Verriegelung zur Entnahme der Bandkassette (13) aufhebbar und zum Einbau der Bandkassette (13) herstellbar ist.

7. Maschine nach einem der vorhergehenden Ansprüche,
**dadurch gekennzeichnet,**
**dass** zur Entnahme oder zum Einbau der Bandkassette (13) eine Koppelung zwischen einem Antrieb (15) für die Bandkassette (13) und der Bandkassette (13) gleichzeitig mit einer Verriegelung der Bandkassette (13) aufhebbar bzw. herstellbar ist, oder
**dass** zur Entnahme oder zum Einbau der Bandkassette (13) die Koppelung zwischen einem Antrieb (15) für die Bandkassette (13) und der Bandkassette (13) gleichzeitig mit einer Entnahme- bzw. Einbaubewegung der Bandkassette (13) nach dem Aufheben bzw. vor dem Herstellen einer Verriegelung der Bandkassette (13) durchführbar ist.

8. Maschine nach einem der vorhergehenden Ansprüche,
**dadurch gekennzeichnet,**
**dass** für eine Koppelung zwischen einem Antrieb (15) für die Bandkassette (13) und der Bandkassette (13) und/oder für eine Verrieglung der Bandkassette (13) an einer Aufnahme (11) der Maschine eine Betätigungseinrichtung (19) vorgesehen ist, insbesondere eine manuell zu betätigende mechanische Betätigungseinrichtung (19), und/oder dass eine Betätigungseinrichtung (19) vorgesehen ist, mit der eine Koppelung zwischen einem Antrieb (15) für die Bandkassette (13) und der Bandkassette (13) einerseits und eine Verriegelung der Bandkassette (13) an einer Aufnahme (11) der Maschine andererseits gleichzeitig aufhebbar und herstellbar sind,
wobei insbesondere die Betätigungseinrichtung einen Hebel (19) mit einer, insbesondere exzentrischen, Welle (29) umfasst, wobei durch Drehen der Welle (29) eine einen Antrieb (15) für die Bandkassette (13) tragende Schwinge (35) um eine Schwenkachse (33) verschwenkbar und/oder ein Verrieglungsorgan (21) für die Bandkassette (13) zwischen einer Verriegelungsposition (21) und einer Freigabeposition bewegbar ist.

9. Maschine nach einem der vorhergehenden Ansprüche,
**dadurch gekennzeichnet,**
**dass** zum Aufheben und Herstellen einer Koppelung zwischen einem Antrieb (15) für die Bandkassette (13) und der Bandkassette (13) die Bandkassette (13) oder eine Baugruppe oder ein Bauteil der Bandkassette relativ zu dem Antrieb (15) bewegbar ist, insbesondere durch Umklappen oder Verschwenken.

10. Maschine nach einem der vorhergehenden Ansprüche,
**dadurch gekennzeichnet,**
**dass** die, insbesondere als Portionierband ausgebildete, Bandkassette (13) mehrere in Förderrichtung gesehen hintereinander angeordnete, insbesondere unmittelbar aufeinanderfolgende, Einzelförderer (71, 73) umfasst, denen jeweils ein separater Antrieb (15) zugeordnet ist.

11. Maschine nach einem der vorhergehenden Ansprüche,
**dadurch gekennzeichnet,**
**dass** in Förderrichtung gesehen wenigstens ein Antrieb (15) linksseitig und wenigstens ein weiterer Antrieb (15) rechtsseitig mit der Bandkassette (13) gekoppelt ist, wobei insbesondere die Antriebe jeweils einen Antriebsmotor (15) umfassen und bevorzugt die Antriebsmotoren (15) quer zur Förderrichtung gesehen nebeneinander unterhalb der Bandkassette (13) mit zur jeweiligen Seite nach außen weisenden Antriebswellen (51) angeordnet sind,
und/oder
**dass** die Koppelung zwischen den Antrieben (15) und der Bandkassette (13) zumindest für eine Mehrzahl von Antrieben (15), insbesondere für alle Antriebe (15), gleichzeitig aufhebbar und herstellbar ist.

12. Maschine nach einem der vorhergehenden Ansprüche,
**dadurch gekennzeichnet,**
**dass** die Bandkassette (13) eine Förderbreite im Bereich von etwa 300mm bis 700mm aufweist, und/oder
**dass** als Fördermittel der Bandkassette (13) Endlosbänder oder Endlosgurte (55) oder eine Vielzahl paralleler Endlosriemen (57) vorgesehen ist, und/oder
**dass** die Bandkassette (13) werkzeuglos entnehmbar und/oder einbaubar ist.

13. Maschine nach einem der vorhergehenden Ansprüche,
**dadurch gekennzeichnet,**
**dass** zur Entnahme und/oder zum Einbau der Bandkassette (13) bei aufgehobener Verriegelung zwischen der Bandkassette (13) und einer an der Maschine verbleibenden Aufnahme (11) die Bandkassette (13) zunächst mit einer Komponente in oder gegen die Förderrichtung relativ zur Aufnahme (11) bewegbar und anschließend von der Aufnahme (11) abhebbar ist, oder dass zur Entnahme und/oder zum Einbau der Bandkassette (13) bei aufgehobener Verriegelung zwischen der Bandkassette (13) und einer an der Maschine verbleibenden Aufnahme (11) die Bandkassette (13) zunächst um die eine von zwei, insbesondere stangenförmigen, Auflagen (65, 67) der Aufnahme (11) verschwenkbar und anschließend von den Auflagen (65, 67) abhebbar ist, wobei insbesondere die andere der Auflagen (65, 67) zur Verriegelung der Bandkassette (13) ausgebildet ist.

14. Maschine nach einem der vorhergehenden Ansprüche,
**dadurch gekennzeichnet,**
**dass** mehrere Bandkassetten (13) in Förderrichtung gesehen hintereinander und/oder nebeneinander angeordnet sind, wobei insbesondere die Bandkassetten (13) unabhängig voneinander entnehmbar und/oder einbaubar sind.

15. Fördereinrichtung für aufzuschneidende oder aufgeschnittene Lebensmittelprodukte, die zumindest einen Bandförderer umfasst, der als entnehmbare Bandkassette (13) ausgeführt ist,
**dadurch gekennzeichnet,**
**dass** die Bandkassette (13) für einen Mehrspurbetrieb ausgelegt und mit mehreren unabhängigen Antrieben (15) koppelbar ist, die jeweils zumindest einer Spur zugeordnet sind, und
**dass** die Bandkassette (13) eine unterhalb von umlaufenden Förderbändern oder Förderriemen angeordnete Basis (25) aufweist, mit der die Bandkassette (13) mechanisch an einem Unterbau (41) des Bandförderers anbringbar ist, der eine an die Basis (25) der Bandkassette (13) angepasste Aufnahme (11) aufweist und bei Entnahme der Bandkassette (13) vor Ort verbleibt,
wobei die Basis (25) den kassettenseitigen Teil einer mechanischen Schnittstelle zwischen Bandkassette (13) und Unterbau (41) darstellt und die Aufnahme (11) den stationären Teil der mechanischen Schnittstelle zwischen Bandkassette (13) und Unterbau (41) bildet.

## Claims

1. A cold meat slicing machine for food products, in particular a high-performance slicer, having at least one belt conveyor, which is designed as a removable conveyor belt unit (13),
**characterized in that**
the conveyor belt unit (13) is configured for a multi-track operation and can be coupled to a plurality of independent drives (15) which are each associated with at least one track; and
**in that** the conveyor belt unit (13) has a base (25) which is arranged beneath circulating conveyor belts or conveyor straps and with which the conveyor belt unit (13) can be mechanically attached to a substructure (41) of the belt conveyor which has a mount (11) adapted to the base (25) of the conveyor belt unit (13) and which remains in situ on the removal of the conveyor belt unit (13),
with the base (25) representing the part of a mechanical interface at the conveyor unit side between the conveyor belt unit (13) and the substructure (41) and the mount (11) forming the stationary part of the mechanical interface between the conveyor belt unit (13) and the substructure (41).

2. A machine in accordance with claim 1,
**characterized in that**
the conveyor belt unit (13) is arranged in front of the cutting plane, viewed in the conveying direction, and is in particular formed as a traction belt; or
**in that** the conveyor belt unit (13) is arranged behind the cutting plane, viewed in the conveying direction, and is in particular formed as a portioning belt.

3. A machine in accordance with claim 1 or claim 2,
**characterized in that**
the conveyor belt unit (13) has - viewed in the conveying direction - a belt length or conveyor length which amounts to less than 500 mm, in particular less than 300 mm, in particular less than 200 mm, and in particular between 50 mm and 150 mm.

4. A machine in accordance with any one of the preceding claims,
**characterized in that**
at least one direct drive (15) for the conveyor belt unit (13) is provided; and/or
**in that** at least one drive motor (15) for the conveyor belt unit (13) is directly coupled to the conveyor belt unit (13), in particular via a belt connection or via a toothed wheel arrangement, preferably a toothed wheel pair, with the drive motor (15) in particular being arranged beneath the conveyor belt unit (13); and/or
**in that** a drive motor (15) for the conveyor belt unit (13) has a drive shaft (51) and the conveyor belt unit (13) has a drive wheel (44), with the drive shaft (51) and the drive wheel (44) being directly coupled to one another, with the drive motor (15) in particular being arranged beneath the conveyor belt unit (13).

5. A machine in accordance with any one of the preceding claims,
**characterized in that**
the conveyor belt unit (13) has a supported belt roller (53), with a drive wheel (44) of the conveyor belt unit (13) being supported via the support of the belt roller (53),
with the drive wheel (44) in particular being arranged coaxially to the belt roller (53) and in particular being arranged axially next to the belt roller (53); and/or
**in that**, for cancelling and establishing a coupling between a drive motor (15) for the conveyor belt unit (13) and the conveyor belt unit (13), a respective relative movement is provided between the drive motor (15) and the conveyor belt unit (13), in particular a pivot movement,
with the spacing between a drive axle, preferably a drive shaft (51), of the drive motor (15) and a drive axle, preferably a drive wheel (44), of the conveyor belt unit (13) in particular being variable by the relative movement.

6. A machine in accordance with any one of the preceding claims,
**characterized in that**
a coupling between a drive (15) for the conveyor belt unit (13) and the conveyor belt unit (13) can be cancelled by relaxing a drive belt (27) and can be established by tautening the drive belt (21), with the relaxing and tautening of the drive belt (27) each being provided by a relative movement between the drive (15) and the conveyor belt unit (13); and/or
**in that** a mount (11) is provided for the conveyor belt unit (13) which remains at the machine with a removed conveyor belt unit (13) and to which the conveyor belt unit (13) can be latched, with the latching being able to be cancelled for removing the conveyor belt unit (13) and being able to be established for installing the conveyor belt unit (13).

7. A machine in accordance with any one of the preceding claims,
**characterized in that**
a coupling between a drive (15) for the conveyor belt unit (13) and the conveyor belt unit (13) can be cancelled or established simultaneously with a latching of the conveyor belt unit (13) for removing or installing the conveyor belt unit (13); or
**in that** the coupling between a drive (15) for the conveyor belt unit (13) and the conveyor belt unit (13) can be carried out simultaneously with a removal movement or installation movement of the conveyor belt unit (13) after the cancellation of or before the establishing of a latching of the conveyor belt unit (13) for removing or installing the conveyor belt unit (13).

8. A machine in accordance with any one of the preceding claims,
**characterized in that**
an actuation device (19), in particular a mechanical actuation device (19) to be actuated manually, is provided for a coupling between a drive (15) for the conveyor belt unit (13) and the conveyor belt unit (13) and/or for a latching of the conveyor belt unit (13) to a mount (11) of the machine; and/or
**in that** an actuation device (19) is provided with which a coupling between a drive (15) for the conveyor belt unit (13) and the conveyor belt unit (13), on the one hand, and a latching of the conveyor belt unit (13) to a mount (11) of the apparatus, on the other hand, can be simultaneously cancelled and established,
with the actuation device in particular comprising a lever (19) having a shaft (29), in particular an eccentric shaft (29), with a rocker (35) carrying a drive (15) for the conveyor belt unit (13) being pivotable about a pivot axis (33) by rotating the shaft (29) and/or with a latching member (21) for the conveyor belt unit (13) being movable between a latched position (21) and a release position.

9. A machine in accordance with any one of the preceding claims,
**characterized in that**
the conveyor belt unit (13) or an assembly or a component of the conveyor belt unit is movable, in particular by folding over or pivoting, relative to the drive (15) for cancelling and establishing a coupling between a drive (15) for the conveyor belt unit (13) and the conveyor belt unit (13).

10. A machine in accordance with any one of the preceding claims,
**characterized in that**
the conveyor belt unit (13), in particular configured as a portioning belt, comprises a plurality of individual conveyors (71, 73) which are arranged, viewed in the conveying direction, behind one another, in particular directly following one another, and which are each associated with a separate drive (15).

11. A machine in accordance with any one of the preceding claims,
**characterized in that**,
viewed in the conveying direction, at least one drive (15) is coupled to the conveyor belt unit (13) at the left side and at least one further drive (15) at the right side, with the drives in particular each comprising a drive motor (15) and with the drive motors (15) preferably being arranged, viewed transversely to the conveying direction, next to one another beneath the conveyor belt unit (13) with drive shafts (51) facing outwardly to the respective side; and/or
**in that** the coupling between the drives (15) and the conveyor belt unit (13) can be simultaneously cancelled and established at least for a plurality of drives (15), in particular for all drives (15).

12. A machine in accordance with any one of the preceding claims,
**characterized in that**
the conveyor belt unit (13) has a conveying width in the range from approximately 300 mm to 700 mm; and/or
**in that** continuous belts or continuous bands (55) or a plurality of parallel continuous straps (57) are provided as conveyor means of the conveyor belt unit (13); and/or
**in that** the conveyor belt unit (13) can be removed and/or installed without tools.

13. A machine in accordance with any one of the preceding claims,
**characterized in that**
the conveyor belt unit (13) can first be moved with a component in or against the conveying direction relative to the mount (11) and can subsequently be raised from the mount (11) for removing and/or for installing the conveyor belt unit (13) with a cancelled latching between the conveyor belt unit (13) and a mount (11) remaining at the machine; or
**in that** the conveyor belt unit (13) can first be pivoted about the one of two supports (65, 67), in particular bar-shaped supports (65, 67), of the mount (11) and can subsequently be raised from the supports (65, 67) for removing and/or for installing the conveyor belt unit (13) with a cancelled latching between the conveyor belt unit (13) and a mount (11) remaining at the machine, with the other one of the supports (65, 67) in particular being configured for latching the conveyor belt unit (13).

14. A machine in accordance with any one of the preceding claims,
**characterized in that**
a plurality of conveyor belt units (13) are arranged behind one another and/or beside one another, viewed in the conveying direction, with the conveyor belt units (13) in particular being able to be removed and/or installed independently of one another.

15. A conveying device for food products to be sliced or for sliced food products which comprises at least one belt conveyor which is designed as a removable conveyor belt unit (13),
**characterized in that**
the conveyor belt unit (13) is configured for a multi-track operation and can be coupled to a plurality of independent drives (15) which are each associated with at least one track; and
**in that** the conveyor belt unit (13) has a base (25) which is arranged beneath circulating conveyor belts or conveyor straps and with which the conveyor belt unit (13) can be mechanically attached to a substructure (41) of the belt conveyor which has a mount (11) adapted to the base (25) of the conveyor belt unit (13) and which remains in situ on the removal of the conveyor belt unit (13),
with the base (25) representing the part of a mechanical interface at the conveyor unit side between the conveyor belt unit (13) and the substructure (41) and the mount (11) forming the stationary part of the mechanical interface between the conveyor belt unit (13) and the substructure (41).

## Revendications

1. Machine trancheuse pour produits alimentaires, en particulier trancheuse à haute performance, comprenant au moins un convoyeur à bande, qui est réalisé sous forme de cassette à bande amovible (13),
**caractérisée en ce que** la cassette à bande (13) est conçue pour un fonctionnement à plusieurs voies, et est susceptible d'être accouplée à plusieurs entraînements indépendants (15), qui sont associés respectivement à au moins une voie, et
**en ce que** la cassette à bande (13) comporte une base (25) agencée au-dessous de bandes ou de courroies de convoyage en recirculation, base au moyen de laquelle la cassette à bande (13) est susceptible d'être rapportée mécaniquement sur une sous-structure (41) du convoyeur à bande, celui-ci comprenant un récepteur (11) adapté à la base (25) de la cassette à bande (13) et demeurant sur place lors de l'enlèvement de la cassette à bande (13),
dans laquelle la base (25) représente la partie côté cassette d'une interface mécanique entre la cassette à bande (13) et la sous-structure (41), et le récepteur (11) forme la partie stationnaire de l'interface mécanique entre la cassette à bande (13) et la sous-structure (41).

2. Machine selon la revendication 1,
**caractérisée en ce que** la cassette à bande (13) est agencée, vue en direction de convoyage, devant le plan de coupe et est en particulier réalisée sous forme de bande de traction, ou
**en ce que** la cassette à bande (13) est agencée, vue en direction de convoyage, derrière le plan de coupe et est en particulier réalisée sous forme de bande de portionnement.

3. Machine selon la revendication 1 ou 2,
**caractérisée en ce que** la cassette à bande (13) présente, vue en direction de convoyage, une largeur de bande ou une longueur de bande qui s'élève à moins de 500 mm, en particulier moins de 300 mm, en particulier moins de 200 mm, et en particulier entre 50 mm et 150 mm.

4. Machine selon l'une des revendications précédentes,
**caractérisée**
**en ce qu'**il est prévu au moins un entraînement direct (15) pour la cassette à bande (13), et/ou
**en ce qu'**au moins un moteur d'entraînement (15) pour la cassette à bande (13) est couplé directement avec la cassette à bande (13), en particulier via une liaison à courroie ou via un agencement à roues dentées, en particulier une paire de roues dentées, dans lequel le moteur d'entraînement (15) est en particulier agencé au-dessous de la cassette à bande (13), et/ou
**en ce qu'**un moteur d'entraînement (15) pour la cassette à bande (13) comprend un arbre d'entraînement (51) et la cassette à bande (13) comprend une roue d'entraînement, de sorte que l'arbre d'entraînement (51) et la roue d'entraînement (44) sont couplés directement l'un à l'autre, et en particulier le moteur d'entraînement (15) est agencé au-dessous de la cassette à bande (13).

5. Machine selon l'une des revendications précédentes,
**caractérisée**
**en ce que** la cassette à bande (13) comprend un rouleau à bande monté en rotation (53), de sorte qu'une roue d'entraînement (44) de la cassette à bande (13) est montée en rotation via le palier du rouleau à bande (53),
dans laquelle en particulier la roue d'entraînement (44) est agencée coaxialement au rouleau à bande (53) est en particulier axialement à côté du rouleau à bande (53), et/ou
**en ce que** pour annuler et établir un accouplement entre un moteur d'entraînement (15) pour la cassette à bande (13) et la cassette à bande (13) il est prévu respectivement un mouvement relatif entre le moteur d'entraînement (15) et la cassette à bande (13), en particulier un mouvement de pivotement,
dans laquelle en particulier en raison du mouvement relatif la distance entre un axe d'entraînement, de préférence un arbre d'entraînement (51) du moteur d'entraînement (15) et un axe d'entraînement, de préférence une roue d'entraînement (44), de la cassette à bande (13), est variable.

6. Machine selon l'une des revendications précédentes,
**caractérisée**
**en ce qu'**un accouplement entre un entraînement (15) pour la cassette à bande (13) et la cassette à bande (13) est susceptible d'être annulé en détendant une courroie d'entraînement (27), de sorte que la détente et la mise sous tension de la courroie d'entraînement (27) est respectivement prévue par un mouvement relatif entre l'entraînement (15) et la cassette à bande (13) et/ou
**en ce qu'**il est prévu pour la cassette à bande (13) une réception (11) qui demeure sur la machine lorsque la cassette à bande (13) est enlevée, et sur laquelle la cassette à bande (13) est susceptible d'être verrouillée, le verrouillage pouvant être annulé pour enlever la cassette à bande (13) et pouvant être établi pour monter la cassette à bande (13).

7. Machine selon l'une des revendications précédentes,
**caractérisée**
**en ce que** pour l'enlèvement ou pour le montage de la cassette à bande (13) un accouplement entre un entraînement (15) pour la cassette à bande (13) et la cassette à bande (13) peut être annulé ou établi simultanément avec un verrouillage de la cassette à bande (13), ou
**en ce que** pour l'enlèvement ou pour le montage de la cassette à bande (13) l'accouplement entre un entraînement (15) pour la cassette à bande (13) et la cassette à bande (13) est réalisable simultanément avec un mouvement d'enlèvement ou de montage de la cassette à bande (13) après l'annulation ou avant l'établissement d'un verrouillage de la cassette à bande (13).

8. Machine selon l'une des revendications précédentes,
**caractérisée**
**en ce que** pour un accouplement entre un entraînement (15) pour la cassette à bande (13) et la cassette à bande (13) et/ou pour un verrouillage de la cassette à bande (13) sur une réception (11) de la machine, il est prévu un moyen d'actionnement (19), en particulier un moyen d'actionnement mécanique à actionnement manuel (19), et/ou en ce qu'il est prévu un moyen d'actionnement (19) avec lequel un accouplement entre un entraînement (15) pour la cassette à bande (13) et la cassette à bande (13) d'une part et un verrouillage de la cassette à bande (13) sur une réception (11) de la machine d'autre part sont susceptibles d'être annulés et établis simultanément,
dans laquelle en particulier le moyen d'actionnement comprend un levier (19) avec un arbre (29), en particulier excentrique, de sorte que par rotation de l'arbre (29) une bascule (35) qui porte un entraînement (15) pour la cassette à bande (13) est capable d'être pivotée autour d'un axe de pivotement (33) et/ou un organe de verrouillage (21) pour la cassette à bande (13) est déplaçable entre une position de verrouillage (21) et une position de libération.

9. Machine selon l'une des revendications précédentes,
**caractérisée en ce que** pour annuler et pour établir un accouplement entre un entraînement (15) pour la cassette à bande (13) et la cassette à bande (13), la cassette à bande (13) ou un groupe structurel ou un composant structurel de la cassette à bande est déplaçable par rapport à l'entraînement (15), en particulier par rabattement ou par pivotement.

10. Machine selon l'une des revendications précédentes,
**caractérisée en ce que** la cassette à bande (13), réalisée en particulier sous forme de bande de portionnement, inclut plusieurs convoyeurs individuels (71, 73), agencés les uns derrière les autres, vus en direction de convoyage, et en particulier immédiatement successifs, auxquels est associé respectivement un entraînement séparé (15).

11. Machine selon l'une des revendications précédentes,
**caractérisée**
**en ce que**, vu en direction de convoyage, au moins un entraînement (15) est accouplé du côté gauche avec la cassette à bande (13) et au moins un autre entraînement (15) est accouplé du côté droit avec la cassette à bande (13), dans laquelle en particulier les entraînements incluent chacun un moteur d'entraînement (15) et les moteurs d'entraînement (15) sont de préférence agencés, comme vus transversalement à la direction de convoyage, les uns à côté des autres au-dessous de la cassette à bande (13) avec des arbres l'entraînement (51) dirigés vers l'extérieur sur le côté respectif, et/ou
**en ce que** l'accouplement entre les entraînements (15) et la cassette à bande (13) est susceptible d'être annulé et établi simultanément au moins pour une pluralité d'entraînements (15), en particulier pour tous les entraînements (15).

12. Machine selon l'une des revendications précédentes,
**caractérisée**
**en ce que** la cassette à bande (13) a une largeur de convoyage dans la plage d'environ 300 mm à 700 mm, et/ou en ce qu'il est prévu à titre de moyen de convoyage de la cassette à bande (13) des bandes sans fin ou des sangles sans fin (55) ou une pluralité de courroies sans fin parallèles (57), et/ou
**en ce que** la cassette à bande (13) peut être enlevée et/ou montée sans outil.

13. Machine selon l'une des revendications précédentes,
**caractérisée**
**en ce que** pour l'enlèvement et/ou pour le montage de la cassette à bande (13) alors que le verrouillage entre la cassette à bande (13) et une réception (11) qui demeure sur la machine est annulé, la cassette à bande (13) est tout d'abord déplacée avec une composante dans la direction de convoyage ou en direction inverse par rapport à la réception (11), et est ensuite soulevée depuis la réception (11), ou
**en ce que** pour l'enlèvement et/ou pour le montage de la cassette à bande (13) alors que le verrouillage entre la cassette à bande (13) et une réception (11) qui demeure sur la machine est annulé, la cassette à bande (13) est tout d'abord pivotée autour de l'un des deux appuis (65, 67), en particulier en forme de tige, de la réception (11), et est ensuite soulevée depuis les appuis (65, 67), dans laquelle en particulier l'autre les appuis (65, 67) est réalisé pour le verrouillage de la cassette à bande (13).

14. Machine selon l'une des revendications précédentes,
**caractérisée en ce que** plusieurs cassettes à bande (13) sont agencées, vues en direction de convoyage, les unes derrière les autres et/ou les unes à côté des autres, et en particulier les cassettes à bande (13) peuvent être enlevées et/ou montées indépendamment les unes des autres.

15. Système de convoyage pour des produits alimentaires tranchés ou à trancher, qui inclut au moins un convoyeur à bande, qui est réalisé sous forme de cassette à bande amovible (13),
**caractérisé en ce que** la cassette à bande (13) est conçue pour un fonctionnement à plusieurs voies et est susceptible d'être accouplée à plusieurs entraînements indépendants (15) qui sont respectivement associés à au moins une voie, et
**en ce que** la cassette à bande (13) comporte une base (25) agencée au-dessous de bandes ou de courroies de convoyage en recirculation, base au moyen de laquelle la cassette à bande (13) est susceptible d'être rapportée mécaniquement sur une sous-structure (41) du convoyeur à bande, celui-ci comprenant un récepteur (11) adapté à la base (25) de la cassette à bande (13) et demeurant sur place lors de l'enlèvement de la cassette à bande (13),
dans laquelle la base (25) représente la partie côté cassette d'une interface mécanique entre la cassette à bande (13) et la sous-structure (41), et le récepteur (11) forme la partie stationnaire de l'interface mécanique entre la cassette à bande (13) et la sous-structure (41).
